# EUROPEAN PATENT APPLICATION

(11) **EP 4 852 362 A1**
(43) Date of publication of application: **09.12.2026**
(21) Application number: 25747965.9
(22) Date of filing: 26.01.2025
(51) Int. Cl.: H04L 5/00, H04B 7/0456

(54) **INFORMATION REPORTING METHOD AND APPARATUS, AND TERMINAL AND NETWORK-SIDE DEVICE**

(30) Priority: 01.02.2024 CN 202410144731
(71) Applicant: Datang Mobile Communications Equipment Co., Ltd., Beijing 100085 (CN)
(72) Inventor: SONG, Lei, Beijing 100085 (CN); GAO, Qiubin, Beijing 100085 (CN); LI, Hui, Beijing 100085 (CN); YE, Lingyun, Beijing 100085 (CN); HUANG, Qiuping, Beijing 100085 (CN); LI, Qianrui, Beijing 100085 (CN); YUAN, Tianhao, Beijing 100085 (CN); LUO, Yajuan, Beijing 100085 (CN)
(74) Representative: Studio Torta S.p.A.
(86) International application number: PCT/CN2025/075278
(87) International publication number: WO 2025/162401

(57) **Abstract**

The embodiments of the present disclosure provide an information reporting method and apparatus, and a terminal and a network-side device. The information reporting method comprises: on the basis of the size of a first frequency-domain resource, determining a frequency-domain basis vector and a merging coefficient corresponding to the first frequency-domain resource, wherein the first frequency-domain resource is one or more segments of frequency-domain resources in a measurement bandwidth; and reporting the frequency-domain basis vector and the merging coefficient to a network-side device.

## Description

### CROSS-REFERENCES TO RELATED APPLICATIONS

The present application claims priority to Chinese patent application No. 202410144731.7 filed on February 01, 2024, entitled "Information Reporting Method and Apparatus, and Terminal and Network-Side Device", which is hereby incorporated by reference in its entirety.

### FIELD

The present application relates to the field of radio communications, and in particular, to methods and apparatuses for reporting information, a terminal and a network side device.

### BACKGROUND

In coherent joint transmission (CJT), if there is time asynchrony or a reciprocity error among multiple transmission reception points (TRP), it may lead to a decrease in performance of a coherent transmission of the multiple TRPs. A network side preprocesses a transmission based on a frequency domain phase difference to eliminate a synchronization error or the reciprocity error, where the frequency domain phase difference may be reported by a terminal, such as a user equipment (UE).

However, when a time synchronization error is large, or a frequency domain granularity of the reciprocity error is small, it may lead to excessive reporting overhead of the frequency domain phase difference. For example, for a 1600 ns time synchronization error with a 15 kHz subcarrier spacing, a reporting granularity of a phase difference needs to be on an order of resource blocks (RBs) to meet a transmission requirement, resulting in an excessively long frequency domain basis vector length and significantly increasing processing complexity of the terminal.

### BRIEF SUMMARY

Embodiments of the present application provide methods and apparatuses for reporting information, a terminal and a network side device, to solve the problems of high terminal feedback overhead and high terminal processing complexity.

An embodiment of the present application provides a method for reporting information, performed by a terminal, including:
determining a frequency domain basis vector and a combining coefficient corresponding to a first frequency domain resource based on a size of the first frequency domain resource, where the first frequency domain resource is one or more segments of frequency domain resources within a measurement bandwidth; and
reporting the frequency domain basis vector and the combining coefficient to a network side device.

In some embodiments, determining the frequency domain basis vector and the combining coefficient corresponding to the first frequency domain resource based on the size of the first frequency domain resource includes:
determining the frequency domain basis vector and the combining coefficient based on the size of the first frequency domain resource and a target granularity, where the target granularity is less than or equal to a reporting granularity of channel state information (CSI).

In some embodiments, reporting the frequency domain basis vector and the combining coefficient to the network side device includes:
reporting the frequency domain basis vector and the combining coefficient to the network side device based on the target granularity.

In some embodiments, the target granularity is determined based on at least one of following:
a correlation of a phase difference corresponding to the first frequency domain resource;
a delay difference corresponding to the first frequency domain resource and a first mapping relationship, where the first mapping relationship is used to indicate a correspondence between the delay difference and the target granularity; or
a network side configuration or a predefined rule.

In some embodiments, the first frequency domain resource includes at least one of following:
a segment of continuous frequency domain resource;
multiple segments of frequency domain resources; or
multiple target resource blocks (RBs) or target resource block (RB) groups among multiple segments of frequency domain resources.

In some embodiments, the first frequency domain resource includes at least one of following:
one or more subbands with a channel quality indicator (CQI) greater than a first threshold;
one or more subbands with a signal to interference noise ratio (SINR) greater than a second threshold;
one or more subbands, or multiple resource blocks (RBs), or multiple resource block (RB) groups selected by the terminal;
one or more subbands, or multiple resource blocks (RBs), or multiple resource block (RB) groups in a middle of a bandwidth;
a subband, or multiple resource blocks (RBs), or multiple resource block (RB) groups with a maximum size; or
multiple subband indexes, or multiple resource blocks (RBs), or multiple resource block (RB) groups configured by a network side.

In some embodiments, the method further includes:
reporting a phase offset between a second frequency domain resource and the first frequency domain resource to the network side device, where the second frequency domain resource is a frequency domain resource other than the first frequency domain resource within the measurement bandwidth.

In some embodiments, reporting the frequency domain basis vector and the combining coefficient to the network side device includes:
reporting a frequency domain basis vector and a combining coefficient corresponding to the multiple segments of frequency domain resources using a target reporting method; or reporting a frequency domain basis vector and a combining coefficient corresponding to multiple reporting quantities using a target reporting method; or reporting a frequency domain basis vector and a combining coefficient corresponding to multiple measurement resources using a target reporting method, where the target reporting method includes at least one of following:
reporting a same frequency domain basis vector among frequency domain basis vectors corresponding to different segments of frequency domain resources, and reporting combining coefficients of different segments of frequency domain resources separately; or reporting a same frequency domain basis vector among frequency domain basis vectors corresponding to different reporting quantities, and reporting combining coefficients of different reporting quantities separately; or reporting a same frequency domain basis vector among frequency domain basis vectors corresponding to different measurement resources, and reporting combining coefficients of different measurement resources separately;
reporting a same frequency domain basis vector among frequency domain basis vectors corresponding to different segments of frequency domain resources, and reporting combining coefficients of different segments of frequency domain resources jointly; or reporting a same frequency domain basis vector among frequency domain basis vectors corresponding to different reporting quantities, and reporting combining coefficients of different reporting quantities jointly; or reporting a same frequency domain basis vector among frequency domain basis vectors corresponding to different measurement resources, and reporting combining coefficients of different measurement resources jointly;
reporting different frequency domain basis vectors among frequency domain basis vectors corresponding to different segments of frequency domain resources, and reporting combining coefficients of different segments of frequency domain resources separately; or reporting different frequency domain basis vectors among frequency domain basis vectors corresponding to different reporting quantities, and reporting combining coefficients of different reporting quantities separately; or reporting different frequency domain basis vectors among frequency domain basis vectors corresponding to different measurement resources, and reporting combining coefficients of different measurement resources separately; or
reporting different frequency domain basis vectors among frequency domain basis vectors corresponding to different segments of frequency domain resources, and reporting combining coefficients of different segments of frequency domain resources jointly; or reporting different frequency domain basis vectors among frequency domain basis vectors corresponding to different reporting quantities, and reporting combining coefficients of different reporting quantities jointly; or reporting different frequency domain basis vectors among frequency domain basis vectors corresponding to different measurement resources, and reporting combining coefficients of different measurement resources jointly;
where the combining coefficient includes at least one of: a non-zero coefficient value, or a maximum coefficient value.

In some embodiments, a quantization method of the combining coefficient includes at least one of following:
performing quantization within a first interval on a maximum coefficient corresponding to each segment of frequency domain resource, or each reporting quantity, or each measurement resource, and performing quantization within a second interval on other non-zero coefficients;
quantizing a maximum value of maximum coefficients corresponding to multiple segments of frequency domain resources, or multiple reporting quantities, or multiple measurement resources to 1, and performing quantization within a second interval on other maximum coefficients and non-zero coefficients; or
quantizing a minimum value of maximum coefficients corresponding to multiple segments of frequency domain resources, or multiple reporting quantities, or multiple measurement resources to 1, performing quantization within a first interval on other maximum coefficients, and performing quantization within a second interval on other non-zero coefficients.

**In** some embodiments, the target RB is determined based on at least one of following:
an index of a starting RB or RB group within each segment of frequency domain resource indicated by the network side device;
an n-th RB or RB group within each segment of frequency domain resource indicated by the network side device;
a frequency domain interval between target RB groups within every two segments of frequency domain resources indicated by the network side device; or
a predefined reporting for an n-th RB group within each segment of frequency domain resource;
where n is a positive integer.

In some embodiments, the method further includes:
in case that the first frequency domain resource includes multiple target RB groups in multiple segments of frequency domain resources, reporting phase offsets between other RB groups besides the target RB group and the target RB groups within each segment of frequency domain resource to the network side device, or reporting phase offsets between adjacent RB groups of the target RB group and the target RB groups within each segment of frequency domain resource to the network side device.

In some embodiments, the phase offset includes at least one of following:
a quantized value of a phase difference;
a cyclic shift value of a phase offset matrix; or
a phase difference reported by a compression way.

In some embodiments, the method further includes at least one of following:
determining the first frequency domain resource based on a number of segments and an index of a starting RB or RB group within each segment of frequency domain resource indicated by the network side device; or determining other segments of frequency domain resources in the first frequency domain resource based on one segment of frequency domain resource in the first frequency domain resource indicated by the network side device;
determining the first frequency domain resource based on a predefined number of segments and/or a predefined number of RBs or first subbands included in each segment; or
determining the first frequency domain resource based on a target granularity.

An embodiment of the present application further provides a method for reporting information, performed by a network side device, including:
receiving a frequency domain basis vector and a combining coefficient corresponding to a first frequency domain resource reported from a terminal, where the first frequency domain resource is one or more segments of frequency domain resources within a measurement bandwidth; and
performing preprocessing on downlink sending based on the frequency domain basis vector and the combining coefficient corresponding to the first frequency domain resource, where the preprocessing is used to eliminate a time synchronization error or a reciprocity error.

In some embodiments, receiving the frequency domain basis vector and the combining coefficient corresponding to the first frequency domain resource reported from the terminal includes:
receiving the frequency domain basis vector and the combining coefficient corresponding to the first frequency domain resource reported from the terminal based on a target granularity, where the target granularity is less than or equal to a reporting granularity of channel state information (CSI).

In some embodiments, the target granularity is determined based on at least one of following:
a correlation of a phase difference corresponding to the first frequency domain resource;
a delay difference corresponding to the first frequency domain resource and a first mapping relationship, where the first mapping relationship is used to indicate a correspondence between the delay difference and the target granularity; or
a network side configuration or a predefined rule.

In some embodiments, the first frequency domain resource includes at least one of following:
a segment of continuous frequency domain resource;
multiple segments of frequency domain resources; or
multiple target resource blocks (RBs) or target resource block (RB) groups among multiple segments of frequency domain resources.

In some embodiments, the first frequency domain resource includes at least one of following:
one or more subbands with a channel quality indicator (CQI) greater than a first threshold;
one or more subbands with a signal to interference noise ratio (SINR) greater than a second threshold;
one or more subbands, or multiple resource blocks (RBs), or multiple resource block (RB) groups selected by the terminal;
one or more subbands, or multiple resource blocks (RBs), or multiple resource block (RB) groups in a middle of a bandwidth;
a subband, or multiple resource blocks (RBs), or multiple resource block (RB) groups with a maximum size; or
multiple subband indexes, or multiple resource blocks (RBs), or multiple resource block (RB) groups configured by a network side.

In some embodiments, the method further includes:
receiving a phase offset between a second frequency domain resource and the first frequency domain resource reported from the terminal, where the second frequency domain resource is a frequency domain resource other than the first frequency domain resource within the measurement bandwidth.

In some embodiments, the target RB is determined based on at least one of following:
an index of a starting RB or RB group within each segment of frequency domain resource indicated by the network side device;
an n-th RB or RB group within each segment of frequency domain resource indicated by the network side device;
a frequency domain interval between target RB groups within every two segments of frequency domain resources indicated by the network side device; or
a predefined reporting for an n-th RB group within each segment of frequency domain resource;
where n is a positive integer.

An embodiment of the present application further provides a terminal, including a memory, a transceiver and a processor,
where the memory is used for storing a computer program, the transceiver is used for receiving and sending data under control of the processor, and the processor is used for reading the computer program in the memory and performing the following operations:
determining a frequency domain basis vector and a combining coefficient corresponding to a first frequency domain resource based on a size of the first frequency domain resource, where the first frequency domain resource is one or more segments of frequency domain resources within a measurement bandwidth; and
reporting the frequency domain basis vector and the combining coefficient to a network side device.

In some embodiments, determining the frequency domain basis vector and the combining coefficient corresponding to the first frequency domain resource based on the size of the first frequency domain resource includes:
determining the frequency domain basis vector and the combining coefficient based on the size of the first frequency domain resource and a target granularity, where the target granularity is less than or equal to a reporting granularity of channel state information (CSI).

In some embodiments, reporting the frequency domain basis vector and the combining coefficient to the network side device includes:
reporting the frequency domain basis vector and the combining coefficient to the network side device based on the target granularity.

In some embodiments, the first frequency domain resource includes at least one of following:
a segment of continuous frequency domain resource;
multiple segments of frequency domain resources; or
multiple target resource blocks (RBs) or target resource block (RB) groups among multiple segments of frequency domain resources.

In some embodiments, the operations further include:
reporting a phase offset between a second frequency domain resource and the first frequency domain resource to the network side device, where the second frequency domain resource is a frequency domain resource other than the first frequency domain resource within the measurement bandwidth.

In some embodiments, reporting the frequency domain basis vector and the combining coefficient to the network side device includes:
reporting a frequency domain basis vector and a combining coefficient corresponding to the multiple segments of frequency domain resources using a target reporting method; or reporting a frequency domain basis vector and a combining coefficient corresponding to multiple reporting quantities using a target reporting method; or reporting a frequency domain basis vector and a combining coefficient corresponding to multiple measurement resources using a target reporting method, where the target reporting method includes at least one of following:
reporting a same frequency domain basis vector among frequency domain basis vectors corresponding to different segments of frequency domain resources, and reporting combining coefficients of different segments of frequency domain resources separately; or reporting a same frequency domain basis vector among frequency domain basis vectors corresponding to different reporting quantities, and reporting combining coefficients of different reporting quantities separately; or reporting a same frequency domain basis vector among frequency domain basis vectors corresponding to different measurement resources, and reporting combining coefficients of different measurement resources separately;
reporting a same frequency domain basis vector among frequency domain basis vectors corresponding to different segments of frequency domain resources, and reporting combining coefficients of different segments of frequency domain resources jointly; or reporting a same frequency domain basis vector among frequency domain basis vectors corresponding to different reporting quantities, and reporting combining coefficients of different reporting quantities jointly; or reporting a same frequency domain basis vector among frequency domain basis vectors corresponding to different measurement resources, and reporting combining coefficients of different measurement resources jointly;
reporting different frequency domain basis vectors among frequency domain basis vectors corresponding to different segments of frequency domain resources, and reporting combining coefficients of different segments of frequency domain resources separately; or reporting different frequency domain basis vectors among frequency domain basis vectors corresponding to different reporting quantities, and reporting combining coefficients of different reporting quantities separately; or reporting different frequency domain basis vectors among frequency domain basis vectors corresponding to different measurement resources, and reporting combining coefficients of different measurement resources separately; or
reporting different frequency domain basis vectors among frequency domain basis vectors corresponding to different segments of frequency domain resources, and reporting combining coefficients of different segments of frequency domain resources jointly; or reporting different frequency domain basis vectors among frequency domain basis vectors corresponding to different reporting quantities, and reporting combining coefficients of different reporting quantities jointly; or reporting different frequency domain basis vectors among frequency domain basis vectors corresponding to different measurement resources, and reporting combining coefficients of different measurement resources jointly;
where the combining coefficient includes at least one of: a non-zero coefficient value, or a maximum coefficient value.

In some embodiments, the operations further include:
in case that the first frequency domain resource includes multiple target RB groups in multiple segments of frequency domain resources, reporting phase offsets between other RB groups besides the target RB group and the target RB groups within each segment of frequency domain resource to the network side device, or reporting phase offsets between adjacent RB groups of the target RB group and the target RB groups within each segment of frequency domain resource to the network side device.

In some embodiments, the operations further include at least one of following:
determining the first frequency domain resource based on a number of segments and an index of a starting RB or RB group within each segment of frequency domain resource indicated by the network side device; or determining other segments of frequency domain resources in the first frequency domain resource based on one segment of frequency domain resource in the first frequency domain resource indicated by the network side device;
determining the first frequency domain resource based on a predefined number of segments and/or a predefined number of RBs or first subbands included in each segment; or
determining the first frequency domain resource based on a target granularity.

An embodiment of the present application further provides a network side device, including a memory, a transceiver and a processor,
where the memory is used for storing a computer program, the transceiver is used for receiving and sending data under control of the processor, and the processor is used for reading the computer program in the memory and performing the following operations:
receiving a frequency domain basis vector and a combining coefficient corresponding to a first frequency domain resource reported from a terminal, where the first frequency domain resource is one or more segments of frequency domain resources within a measurement bandwidth; and
performing preprocessing on downlink sending based on the frequency domain basis vector and the combining coefficient corresponding to the first frequency domain resource, where the preprocessing is used to eliminate a time synchronization error or a reciprocity error.

In some embodiments, receiving the frequency domain basis vector and the combining coefficient corresponding to the first frequency domain resource reported from the terminal includes:
receiving the frequency domain basis vector and the combining coefficient corresponding to the first frequency domain resource reported from the terminal based on a target granularity, where the target granularity is less than or equal to a reporting granularity of channel state information (CSI).

In some embodiments, the first frequency domain resource includes at least one of following:
a segment of continuous frequency domain resource;
multiple segments of frequency domain resources; or
multiple target resource blocks (RBs) or target resource block (RB) groups among multiple segments of frequency domain resources.

In some embodiments, the operations further include:
receiving a phase offset between a second frequency domain resource and the first frequency domain resource reported from the terminal, where the second frequency domain resource is a frequency domain resource other than the first frequency domain resource within the measurement bandwidth.

An embodiment of the present application further provides an apparatus for reporting information, for use in a terminal, including:
a determining module, used for determining a frequency domain basis vector and a combining coefficient corresponding to a first frequency domain resource based on a size of the first frequency domain resource, where the first frequency domain resource is one or more segments of frequency domain resources within a measurement bandwidth; and
a sending module, used for reporting the frequency domain basis vector and the combining coefficient to a network side device.

An embodiment of the present application further provides an apparatus for reporting information, for use in a network side device, including:
a receiving module, used for receiving a frequency domain basis vector and a combining coefficient corresponding to a first frequency domain resource reported from a terminal, where the first frequency domain resource is one or more segments of frequency domain resources within a measurement bandwidth; and
a processing module, used for performing preprocessing on downlink sending based on the frequency domain basis vector and the combining coefficient corresponding to the first frequency domain resource, where the preprocessing is used to eliminate a time synchronization error or a reciprocity error.

An embodiment of the present application further provides a non-transitory readable storage medium storing a computer program, where the computer program is used for causing a processor to perform any of the methods described above.

An embodiment of the present application further provides a processor readable storage medium storing a computer program, where the computer program is used for causing a processor to perform any of the methods described above.

An embodiment of the present application further provides a communication device storing a computer program, where the computer program is used for causing the communication device to perform any of the methods described above.

An embodiment of the present application further provides a chip product storing a computer program, where the computer program is used for causing the chip product to perform any of the methods described above.

In the methods and apparatuses for reporting information, the terminal and the network side device provided by the embodiments of the present application, by using a frequency domain resource segmentation way, a first frequency domain resource is one or more segments of frequency domain resources within a measurement bandwidth; first, a frequency domain basis vector and a combining coefficient corresponding to the first frequency domain resource is determined based on a size of the first frequency domain resource; then, the frequency domain basis vector and the combining coefficient corresponding to the first frequency domain resource (i.e., the segmented frequency domain resource) are reported. Since the first frequency domain resource is one or more segments of frequency domain resources within the measurement bandwidth, rather than the entire measurement bandwidth, a length of the frequency domain basis vector may be shortened, reducing terminal feedback overhead and terminal processing complexity.

### BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.
FIG. 1 is a first schematic flowchart of a method for reporting information according to an embodiment of the present application;
FIG. 2 is a second schematic flowchart of a method for reporting information according to an embodiment of the present application;
FIG. 3 is a first schematic diagram of compressing and reporting reporting quantities corresponding to one segment of continuous frequency domain resource according to an embodiment of the present application;
FIG. 4 is a schematic diagram of compressing and reporting reporting quantities corresponding to multiple segments of continuous frequency domain resources, respectively, according to an embodiment of the present application;
FIG. 5 is a first schematic diagram of selecting with intervals some frequency domain resources for compressing and reporting reporting quantities according to an embodiment of the present application;
FIG. 6 is a schematic diagram of reporting a phase offset between an unselected resource block (RB) or RB group and a selected RB or RB group according to an embodiment of the present application;
FIG. 7 is a second schematic diagram of selecting with intervals some frequency domain resources for compressing and reporting reporting quantities according to an embodiment of the present application;
FIG. 8 is a second schematic diagram of compressing and reporting reporting quantities corresponding to one segment of continuous frequency domain resource according to an embodiment of the present application;
FIG. 9 is a schematic structural diagram of a terminal according to an embodiment of the present application;
FIG. 10 is a schematic structural diagram of a network side device according to an embodiment of the present application;
FIG. 11 is a first schematic structural diagram of an apparatus for reporting information according to an embodiment of the present application; and
FIG. 12 is a second schematic structural diagram of an apparatus for reporting information according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

Embodiments of the present disclosure provide methods and apparatuses for reporting information, a terminal and a network side device, which may reduce terminal feedback overhead and terminal processing complexity.

The methods and apparatuses are based on the same conception. Since the methods and the apparatuses adopt similar principles to solve problems, as for implementations of the apparatuses and the methods, reference may be made to each other, and repeated contents are not elaborated herein.

The solutions according to the embodiments of the present application may be applicable to various systems, for example, 5th generation (5G) systems, 6th generation (6G) systems, etc. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

To facilitate a clearer understanding of the various embodiments of the present application, some relevant knowledge is introduced first.

### I. Rel-16 frequency domain compression reporting way

One layer of an Rel-16 frequency domain compression codebook may be represented as a *P* × *N*₃ precoding matrix: $W = {W}_{1} {{W}^{˜}}_{2} {W}_{f}^{H} ,$ in the precoding expression, *W*₁, *W̃*₂, and *W_{f}* correspond to spatial domain compression, linear combining coefficients, and frequency domain compression, respectively.

### II. Spatial domain compression

Spatial domain compression is achieved through *W*₁: ${W}_{1} = \left[\begin{matrix}{v}_{0} {v}_{1} … {v}_{L - 1} & 0 \\ 0 & {v}_{0} {v}_{1} … {v}_{L - 1}\end{matrix}\right] ,$ where ${\left\{{v}_{i}\right\}}_{i = 0}^{L - 1}$ are orthogonal discrete Fourier transform (DFT) vectors of dimension *N*₁*N*₂ × 1, and *L* is a number of selected spatial basis vectors. *W*₁ is a set of spatial basis vectors shared by multiple layers and multiple polarization directions. A total number of spatial basis vectors is *N*₁*O*₁*N*₂*O*₂, where *O*₁ and *O*₂ are oversampling factors in two dimensions (vertical and horizontal).

### III. Frequency domain compression

Frequency domain compression is achieved through *W_{f}.* For multi-layer transmission, all beams within a same layer share a same frequency domain basis vector, and different layers use different frequency domain basis vectors. For layer v, the frequency domain basis vector may be expressed as: ${W}_{f} = \left[{f}_{{k}_{0}}{f}_{{k}_{1}}…{f}_{{k}_{M - 1}}\right] ,$ where ${\left\{{f}_{{k}_{m}}\right\}}_{m = 0}^{{M}_{υ} - 1}$ represents *M_{υ} N*₃ × 1 orthogonal DFT vectors, *M_{υ}* is a number of frequency domain basis vectors, and ${\left\{{k}_{m}\right\}}_{m = 0}^{{M}_{υ} - 1}$ is a set of basis vector indices selected from {0,1, ... , *N*₃ - 1}.

When N₃≤19, a single-step indication way is adopted. After selecting the frequency domain basis vector and calculating a corresponding combining coefficient, a terminal may use a phase rotation matrix (i.e., a cyclic shift operation) to preprocess (multiply) the frequency domain basis vector matrix to ensure that a basis vector corresponding to a strongest coefficient (see the description of combining coefficients later) is a first frequency domain basis vector (index 0). In this way, when indicating the basis vector, only the frequency domain basis vectors corresponding to other combining coefficients need to be indicated, reducing feedback overhead. That is, *M_{υ}* - 1 frequency domain basis vectors are selected from *N*₃ - 1 frequency domain basis vectors; ${M}_{υ} = \left⌈{p}_{υ}\frac{{N}_{3}}{R}\right⌉$, which represents the number of frequency domain basis vectors, R represents a number of precoding matrix indicators (PMIs) corresponding to each subband, which is configured by a higher layer parameter, and *p_{υ}* represents a scaling factor for the number of frequency domain basis vectors of layer v, a value of which is predefined in a protocol (takes a value of 1/4 or 1/8). $\left(\begin{matrix}A \\ B\end{matrix}\right)$ represents a number of permutations and combinations of selecting B basis vectors from A basis vectors, and $\left⌈⋅\right⌉$ represents a round-up operation. Since each subband uses a same phase rotation matrix, the phase rotation matrix does not affect system performance, and the terminal does not need to report the phase rotation matrix.

When *N*₃ > 19, a two-step indication way is adopted. First, the terminal determines an intermediate basis vector set containing 2*M_{υ}* frequency domain basis vectors. A starting position of the intermediate basis vector set is indicated through a parameter *Mᵢₙᵢₜᵢₐₗ*, that is, the consecutive 2*M_{υ}* frequency domain basis vectors starting from *Mᵢₙᵢₜᵢₐₗ* are used as the intermediate basis vector set. Then, the terminal selects *M_{υ}* - 1 basis vectors from the intermediate basis vector set and feeds them back to a network side.

### IV. Linear combining coefficients

The combining coefficients are achieved through *W̃*₂. Each layer only needs to report coefficients with larger amplitudes, and remaining coefficients may be assumed to be 0, which further reduces feedback overhead. The network side configures a maximum number of non-zero coefficients that the terminal may report. When a rank indication (RI) = 1, the maximum number of non-zero coefficients is ${K}_{0} = \left⌈β\times 2{LM}_{υ}\right⌉$; when RI > 1, the maximum number of non-zero coefficients across all layers is 2*K*₀. A value of *β* is predefined by a protocol.

When an error is large, if a relevant frequency domain compression way is used, and reporting accuracy of a reporting quantity is guaranteed, reporting needs to be performed at a smaller frequency domain granularity. For example, each resource block (RB) needs to feed back a reporting quantity, which may lead to an excessively long basis vector length, resulting in excessively high computational complexity for the terminal to determine the frequency domain basis vector and the combining coefficient, and increasing the feedback overhead accordingly.

Embodiments of the present application provide a segmentation-based compression reporting way based on a reporting characteristic of a phase difference (e.g., a theoretical value of a phase difference between subcarrier i+1 and subcarrier i is *e*^{*j*2}*^{πf^{iτ}},* where τ is influence of an error, which is inherently sparse or segmented sparse in the frequency domain) to reduce the feedback overhead. Other measurement quantities or reporting quantities (such as time difference, frequency difference, phase shift, etc.) that have similar characteristics (such as being sparse in the frequency domain) to phase differences may also be reported using the segmented compression way in the present application.

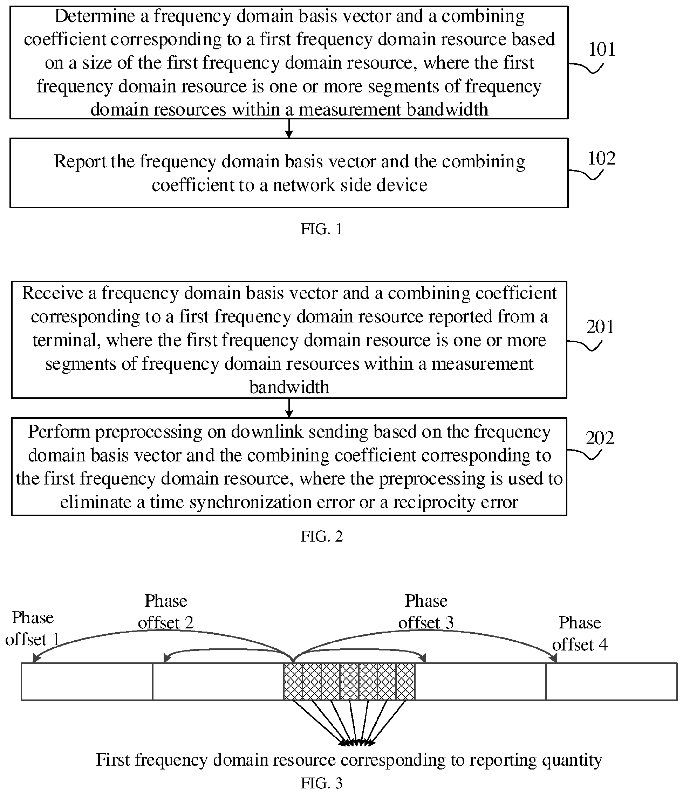

FIG. 1 is a first schematic flowchart of a method for reporting information according to an embodiment of the present application. The method is performed by a terminal. As shown in FIG. 1, the method includes step 101 to step 102.

Step 101: determine a frequency domain basis vector and a combining coefficient corresponding to a first frequency domain resource based on a size of the first frequency domain resource, where the first frequency domain resource is one or more segments of frequency domain resources within a measurement bandwidth.

It should be noted that the method for reporting information provided by the present application is applicable to at least one of the following situations: coherent joint transmission (CJT); multiple transmit receive points (TRPs) joint transmission; or single TRP transmission.

In the embodiments of the present application, the first frequency domain resource is obtained by segmenting the frequency domain resources within the measurement bandwidth. The size of the first frequency domain resource is not greater than a size of the measurement bandwidth. For example, the first frequency domain resource includes at least one of following:
1) a segment of continuous frequency domain resource;
2) multiple segments of frequency domain resource; or
3) multiple target resource blocks (RBs) or target resource block (RB) groups among multiple segments of frequency domain resources.

In an embodiment, the target RB is determined based on at least one of following:
determination way 1: an index of a starting RB or RB group within each segment of frequency domain resource indicated by the network side device; for example, the index (an offset relative to the starting RB of the measurement bandwidth, or an offset relative to a common resource block (CRB)) of the starting RB or RB group is indicated;
determination way 2: an n-th RB or RB group within each segment of frequency domain resource indicated by the network side device, where n is a positive integer;
determination way 3: a frequency domain interval between target RB groups within every two segments of frequency domain resources indicated by the network side device; it should be noted that the frequency domain interval between the target RB groups is different from a target granularity and may be an integer multiple of the target granularity; or
determination way 4: a predefined reporting for an n-th RB group within each segment of frequency domain resource, where n is a positive integer.

In the embodiments of the present application, the frequency domain basis vector and the combining coefficient corresponding to the first frequency domain resource are determined based on the size of the first frequency domain resource and the target granularity. The target granularity is less than or equal to a reporting granularity of channel state information (CSI) predefined in a protocol.

Step 102: report the frequency domain basis vector and the combining coefficient to a network side device.

In some embodiments, after determining the frequency domain basis vector and the combining coefficient corresponding to the first frequency domain resource based on the size of the first frequency domain resource, the terminal reports the frequency domain basis vector and the combining coefficient to the network-side device. After receiving the frequency domain basis vector and the combining coefficient corresponding to the first frequency domain resource reported from the terminal, the network side device performs preprocessing on downlink sending based on the frequency domain basis vector and the combining coefficient corresponding to the first frequency domain resource to eliminate a time synchronization error or a reciprocity error.

In the method provided by the embodiments of the present application, by using a frequency domain resource segmentation way, a first frequency domain resource is one or more segments of frequency domain resources within a measurement bandwidth; first, a frequency domain basis vector and a combining coefficient corresponding to the first frequency domain resource is determined based on a size of the first frequency domain resource; then, the frequency domain basis vector and the combining coefficient corresponding to the first frequency domain resource (i.e., the segmented frequency domain resource) are reported. Since the first frequency domain resource is one or more segments of frequency domain resources within the measurement bandwidth, rather than the entire measurement bandwidth, a length of the frequency domain basis vector may be shortened, reducing terminal feedback overhead and terminal processing complexity.

In some embodiments, the first frequency domain resource is obtained by segmenting the frequency domain resources within the measurement bandwidth. The segmentation way includes at least one of following.

### Segmentation way 1: a segmentation way based on a network side configuration

The network side indicates a number of segments and the starting RB or starting RB group of each segment to the terminal; or
the network side indicates the first frequency domain resource to the terminal, and the terminal determines frequency domain resources of other segments. For example, a starting RB index and a number of continuous RBs of the first frequency domain resource are indicated to the terminal, or a starting RB group index and a number of continuous RB groups of the first frequency domain resource are indicated to the terminal, or a starting first subband numbering and a number of continuous first subbands of the first frequency domain resource are indicated to the terminal, or a starting second subband numbering and a number of continuous second subbands of the first frequency domain resource are indicated to the terminal, or the terminal is indicated by bit mapping with RB or RB group or first subband or second subband as a granularity. The first subband is a subband corresponding to the target granularity, and the second subband is a subband corresponding to the CSI reporting granularity.

After determining the first frequency domain resource, the terminal determines other segments using at least one of following ways:
1) determining a continuous number of RBs or RB groups or first subbands or second subbands of other segments based on a number of RBs or RB groups or first subbands or second subbands of the first frequency domain resource;
2) determining a number of segments based on a number of RBs or RB groups or first subbands or second subbands of the first frequency domain resource;
3) determining a starting RB index or starting RB group index or starting first subband index or starting second subband index of other segments based on a number of RBs or RB groups or first subbands or second subbands of the first frequency domain resource.

### Segmentation way 2: a segmentation way based on a predefined rule

The first frequency domain resource and other frequency domain resources are all determined by the terminal based on a predefined rule. For example, a number of segments and/or a number of RBs or RB groups or first subbands or second subbands included in each segment is predefined in a protocol, and the segmentation way is similar to a first subband division way; the terminal determines a frequency domain resource corresponding to each segment based on the predefined number of RBs or RB groups or first subbands or second subbands included in each segment, or the number of segments.

### Segmentation way 3: a segmentation way determined by a terminal

A terminal determines a number of RBs or RB groups or first subbands or second subbands of the first frequency domain resource based on a first granularity or a target granularity, and then indicates a starting RB index or starting RB group index or starting first subband index or starting second subband index of the first frequency domain resource to the network side. The terminal indicates the number of segments, or the number of RBs or RB groups or first subbands or second subbands included in the first frequency domain resource to the network side.

In embodiments of the present application, the first frequency domain resource may include at least one of following:
1) one or more subbands with a channel quality indicator (CQI) greater than a first threshold; for example, the subbands here correspond to the first granularity or the target granularity;
2) one or more subbands with a signal to interference noise ratio (SINR) greater than a second threshold;
3) one or more subbands, or multiple resource blocks (RBs), or multiple resource block (RB) groups selected by the terminal;
4) one or more subbands, or multiple resource blocks (RBs), or multiple resource block (RB) groups in a middle of a bandwidth;
5) a subband, or multiple resource blocks (RBs), or multiple resource block (RB) groups with a maximum size; or
6) multiple subband indexes, or multiple resource blocks (RBs), or multiple resource block (RB) groups configured by a network side.

In the method for reporting information provided by the embodiments of the present application, the terminal determines and reports a first reporting quantity (e.g., phase difference) and the frequency domain basis vector and the combining coefficient corresponding to the first reporting quantity based on one or more frequency domain resources within the measurement bandwidth and the first granularity or target granularity. The target granularity is less than or equal to the first granularity, where the first granularity is a CSI reporting granularity predefined in a protocol, used as a reporting granularity of other reporting quantities besides the first reporting quantity.

In an embodiment, the method for reporting information provided by the embodiments of the present application is a segmented phase difference compression reporting method. The terminal compresses and reports the reporting quantity corresponding to one or more frequency domain resources (first frequency domain resources), or compresses and reports the reporting quantity of a portion of RBs or RB groups within each segment of frequency domain resource. For other frequency domain resources that do not report a first reporting quantity, the terminal reports a second reporting quantity (e.g., phase offset) relative to the reported quantity. The network side determines a preprocessing factor corresponding to the entire frequency domain resource (third frequency domain resource) based on the reporting of the terminal report and performs downlink sending preprocessing.

An implementation way of reporting the frequency domain basis vector and the combining coefficient to the network side device in step 102 above includes: reporting the frequency domain basis vector and the combining coefficient to the network side device based on the target granularity. Since the target granularity is less than or equal to the CSI reporting granularity predefined in the protocol, feedback accuracy may be improved.

In some embodiments, the target granularity is determined based on at least one of following:
1) a correlation of a phase difference corresponding to the first frequency domain resource; for example, the correlation is determined based on an inner product of vectors composed of measured values, or a change in measured values;
2) a delay difference corresponding to the first frequency domain resource and a first mapping relationship, where the first mapping relationship is used to indicate a correspondence between the delay difference and the target granularity; for example, the first mapping relationship is a correspondence between the delay difference and the target granularity specified in a protocol; or
3) a network side configuration or a predefined rule.

In some embodiments, the terminal reports a phase offset between the second frequency domain resource and the first frequency domain resource to the network side device, where the second frequency domain resource is a frequency domain resource other than the first frequency domain resource within the measurement bandwidth.

In some embodiments, the implementation way of reporting the frequency domain basis vector and the combining coefficient to the network side device in step 102 above includes: using a target reporting method to report the frequency domain basis vector and the combining coefficient corresponding to the multiple segments of frequency domain resources or multiple reporting quantities or multiple measurement resources. That is, using the target reporting method to report the frequency domain basis vector and the combining coefficient corresponding to the multiple segments of frequency domain resources, or using the target reporting method to report the frequency domain basis vector and the combining coefficient corresponding to the multiple reporting quantities, or using the target reporting method to report the frequency domain basis vector and the combining coefficient corresponding to the multiple measurement resources. Reporting the frequency domain basis vector and the combining coefficient corresponding to the multiple measurement resources indicates that the reporting is for different TRPs, that is, reporting quantities corresponding to the multiple TRPs are all reported using the target reporting method. The target reporting method includes at least one of following.

Way a: reporting a same frequency domain basis vector among frequency domain basis vectors corresponding to different segments of frequency domain resources, and reporting combining coefficients of different segments of frequency domain resources separately; or reporting a same frequency domain basis vector among frequency domain basis vectors corresponding to different reporting quantities, and reporting combining coefficients of different reporting quantities separately; or reporting a same frequency domain basis vector among frequency domain basis vectors corresponding to different measurement resources, and reporting combining coefficients of different measurement resources separately.

The combining coefficient includes at least one of a non-zero coefficient value or a maximum coefficient value.

In an embodiment, the maximum coefficient may be at least one of following: a maximum coefficient corresponding to each segment of frequency domain resource, a maximum coefficient among all combining coefficients corresponding to multiple segments of frequency domain resource segments, a maximum coefficient corresponding to each reporting quantity, a maximum coefficient among all combining coefficients corresponding to multiple reporting quantities, a maximum coefficient corresponding to each measurement resource, a maximum coefficient among all combining coefficients corresponding to multiple measurement resources. Accordingly, the non-zero coefficient may be at least one of following: a non-zero coefficient corresponding to each segment of frequency domain resource, a non-zero coefficient corresponding to multiple segments of frequency domain resources, a non-zero coefficient corresponding to each reporting quantity, a non-zero coefficient corresponding to multiple reporting quantities, a non-zero coefficient corresponding to each measurement resource, or a non-zero coefficient corresponding to multiple measurement resources.

Way b: reporting a same frequency domain basis vector among frequency domain basis vectors corresponding to different segments of frequency domain resources, and reporting combining coefficients of different segments of frequency domain resources jointly; or reporting a same frequency domain basis vector among frequency domain basis vectors corresponding to different reporting quantities, and reporting combining coefficients of different reporting quantities jointly; or reporting a same frequency domain basis vector among frequency domain basis vectors corresponding to different measurement resources, and reporting combining coefficients of different measurement resources jointly;

In an embodiment, a way for jointly reporting a strongest coefficient value of each segment includes: the terminal uses a coefficient with a largest amplitude among all segments for normalization. The coefficient with the largest amplitude does not need to be reported. The strongest coefficients of other segments may be quantized and reported using a relevant amplitude quantization method (i.e., amplitude less than 1). Alternatively, the terminal uses a coefficient with a smallest amplitude among all segments for normalization. The strongest coefficient of each frequency domain resource segment is quantized within an interval [1, a].

Way c: reporting different frequency domain basis vectors among frequency domain basis vectors corresponding to different segments of frequency domain resources, and reporting combining coefficients of different segments of frequency domain resources separately; or reporting different frequency domain basis vectors among frequency domain basis vectors corresponding to different reporting quantities, and reporting combining coefficients of different reporting quantities separately; or reporting different frequency domain basis vectors among frequency domain basis vectors corresponding to different measurement resources, and reporting combining coefficients of different measurement resources separately.

Way d: reporting different frequency domain basis vectors among frequency domain basis vectors corresponding to different segments of frequency domain resources, and reporting combining coefficients of different segments of frequency domain resources jointly; or reporting different frequency domain basis vectors among frequency domain basis vectors corresponding to different reporting quantities, and reporting combining coefficients of different reporting quantities jointly; or reporting different frequency domain basis vectors among frequency domain basis vectors corresponding to different measurement resources, and reporting combining coefficients of different measurement resources jointly.

The quantization method for the combining coefficient in the embodiments of the present application includes at least one of following:
1) performing quantization within a first interval on a maximum coefficient corresponding to each segment of frequency domain resource, or each reporting quantity, or each measurement resource, and performing quantization within a second interval on other non-zero coefficients;
2) quantizing a maximum value of maximum coefficients corresponding to multiple segments of frequency domain resources, or multiple reporting quantities, or multiple measurement resources to 1, and performing quantization within a second interval on other maximum coefficients and non-zero coefficients; or
3) quantizing a minimum value of maximum coefficients corresponding to multiple segments of frequency domain resources, or multiple reporting quantities, or multiple measurement resources to 1, performing quantization within a first interval on other maximum coefficients, and performing quantization within a second interval on other non-zero coefficients.

In the embodiments of the present application, in case that the first frequency domain resource includes multiple target RB groups in multiple segments of frequency domain resources, phase offsets between other RB groups besides the target RB group and the target RB groups within each segment of frequency domain resource are reported to the network side device, or phase offsets between adjacent RB groups of the target RB group and the target RB groups within each segment of frequency domain resource are reported to the network side device.

In some embodiments, the phase offset includes at least one of following: a quantized value of a phase difference; a cyclic shift value of a phase offset matrix; or a phase difference reported by a compression way.

In embodiments of the present application, the terminal may determine the first frequency domain resource based on the number of segments and the index of the starting RB or RB group within each segment of frequency domain resource indicated by the network side device; or, the terminal determines other segments of frequency domain resource in the first frequency domain resource based on one segment of frequency domain resource in the first frequency domain resource indicated by the network side device; or the terminal may also determine the first frequency domain resource based on the number of segments and/or the number of RBs or the number of first sub-bands included in each segment as predefined in a protocol; or the terminal may also determine the first frequency domain resource based on the target granularity.

FIG. 2 is a second schematic flowchart of a method for reporting information according to an embodiment of the present application. The method is performed by a network side device. As shown in FIG. 2, the method includes step 201 and step 202.

Step 201: receive a frequency domain basis vector and a combining coefficient corresponding to a first frequency domain resource reported from a terminal, where the first frequency domain resource is one or more segments of frequency domain resources within a measurement bandwidth.

It should be noted that the method for reporting information provided by the present application is applicable to at least one of the following situations: CJT; multiple TRPs joint transmission; or single TRP transmission.

Step 202: perform preprocessing on downlink sending based on the frequency domain basis vector and the combining coefficient corresponding to the first frequency domain resource, where the preprocessing is used to eliminate a time synchronization error or a reciprocity error.

In some embodiments, after receiving the frequency domain basis vector and the combining coefficient corresponding to the first frequency domain resource reported from the terminal, the network side device preprocesses the downlink sending based on the frequency domain basis vector and the combining coefficient corresponding to the first frequency domain resource to eliminate the time synchronization errors or the reciprocity error.

In the method for reporting information provided by embodiments of the present application, by using a frequency domain resource segmentation way, the first frequency domain resource is one or more segments of frequency domain resource within the measurement bandwidth. The terminal reports the frequency domain basis vector and the combining coefficient corresponding to the first frequency domain resource (i.e., the segmented frequency domain resource). Since the first frequency domain resource is one or more segments of frequency domain resources within the measurement bandwidth, rather than the entire measurement bandwidth, a length of the frequency domain basis vector may be shortened, reducing terminal feedback overhead and terminal processing complexity.

In some embodiments, receiving the frequency domain basis vector and the combining coefficient corresponding to the first frequency domain resource reported from the terminal includes: receiving the frequency domain basis vector and the combining coefficient corresponding to the first frequency domain resource reported from the terminal based on a target granularity, where the target granularity is less than or equal to a reporting granularity of channel state information (CSI).

In some embodiments, the target granularity is determined based on at least one of following:
a correlation of a phase difference corresponding to the first frequency domain resource;
a delay difference corresponding to the first frequency domain resource and a first mapping relationship, where the first mapping relationship is used to indicate a correspondence between the delay difference and the target granularity; or
a network side configuration or a predefined rule.

In some embodiments, the first frequency domain resource includes at least one of following:
a segment of continuous frequency domain resource;
multiple segments of frequency domain resources; or
multiple target resource blocks (RBs) or target resource block (RB) groups among multiple segments of frequency domain resources.

In some embodiments, the first frequency domain resource includes at least one of following:
one or more subbands with a channel quality indicator (CQI) greater than a first threshold;
one or more subbands with a signal to interference noise ratio (SINR) greater than a second threshold;
one or more subbands, or multiple resource blocks (RBs), or multiple resource block (RB) groups selected by the terminal;
one or more subbands, or multiple resource blocks (RBs), or multiple resource block (RB) groups in a middle of a bandwidth;
a subband, or multiple resource blocks (RBs), or multiple resource block (RB) groups with a maximum size; or
multiple subband indexes, or multiple resource blocks (RBs), or multiple resource block (RB) groups configured by a network side.

In some embodiments, the method further includes:
receiving a phase offset between a second frequency domain resource and the first frequency domain resource reported from the terminal, where the second frequency domain resource is a frequency domain resource other than the first frequency domain resource within the measurement bandwidth.

In some embodiments, the target RB is determined based on at least one of following:
an index of a starting RB or RB group within each segment of frequency domain resource indicated by the network side device;
an n-th RB or RB group within each segment of frequency domain resource indicated by the network side device;
a frequency domain interval between target RB groups within every two segments of frequency domain resources indicated by the network side device; or
a predefined reporting for an n-th RB group within each segment of frequency domain resource;
where n is a positive integer.

The method for reporting information provided by the embodiments of the present application is illustrated through several specific embodiments.

Embodiment 1: a terminal compresses and reports a phase difference corresponding to a continuous frequency domain resource (the first frequency domain resource).

Within the first frequency domain resource, the terminal compresses and reports a first reporting quantity based on a target granularity, where the target granularity differs from a subband size (first granularity) of CSI reporting (in a related protocol). A way for determining a length of a basis vector is: the length of the basis vector is determined by a size of the first frequency domain resource and the target granularity. A way for determining the combining coefficient is consistent with the related art.

In some embodiments, the terminal reports a phase offset (second reporting quantity, used for downlink sending preprocessing of other resources) between a starting RB or RB group of other frequency domain resources (or a starting RB group corresponding to the target granularity) and a starting RB (or starting RB group) of the first frequency domain resource reported by the terminal. In some embodiments, the terminal reports indexes of one or more first frequency domain resources.

In some embodiments, a way for determining the target granularity may include at least one of following:
option 1: the terminal determines the target granularity based on a correlation of measured values, such as determining the correlation based on an inner product of a vector composed of measured values, or a change in measured values;
option 2: the terminal determines the target granularity based on a measured delay difference and a value of a predefined rule (a correspondence between the delay difference and the target granularity is specified in a protocol); or
option 3: the terminal determines the target granularity based on a network side configuration or a predefined rule.

In some embodiments, the first frequency domain resource may be at least one of following:
1) one or more first subbands with a best CQI quality (or SINR quality) (e.g., to be measured via CJT codebook feedback) or one or more first subbands or multiple RBs or multiple RB groups selected by the terminal;
2) one or more first subbands, or multiple RBs or multiple RB groups in a middle of a bandwidth;
3) a subband (e.g., not the last subband), or multiple RBs, or multiple RB groups with a maximum size; or
4) multiple subband indexes, or multiple RBs, or multiple RB groups configured by a network side.

In some embodiments, the terminal reports the phase difference corresponding to the first frequency domain resource. When performing reporting, the reporting (the reporting quantities include basis vectors, combining coefficients, etc.) is made based on the target granularity. After receiving the reporting from the terminal, the network side uses this group of reporting quantities to adjust a sending phase of a transmission corresponding to a third frequency domain resource of the terminal. The third frequency domain resource may be an entire transmission bandwidth of the terminal. The bandwidth of the third frequency domain resource is greater than that of the first frequency domain resource (i.e., the resource corresponding to the reporting), or a number of RBs included in the third frequency domain resource is greater than a number of RBs corresponding to the first frequency domain resource.

The first subband is a subband defined by a current protocol, i.e., a subband used for other CSI feedback (such as PMI reporting, RI reporting, CQI reporting, etc., based on Type I codebook, Type II codebook, CJT codebook, etc.). The terminal reports one PMI, CQI, etc., for each subband. A size of the subband (i.e., a number of physical resource blocks (PRBs) the subband contains) is predefined by a protocol, as shown in Table 1. For example, when the number of PRBs corresponding to a bandwidth part (BWP) is 145 to 275, the size of the subband may be configured to 16 PRBs or 32 PRBs, meaning 16 PRBs or 32 PRBs correspond to a same precoding matrix. The size of the subband may also be referred to as a granularity of CSI reporting. In the present application, the granularity of CSI reporting is also referred to as the first granularity.

**Table 1: Configurable size of subband**

| BWP (PRBs) | Size of subband (PRBs) |
|---|---|
| 24 - 72 | 4, 8 |
| 73 - 144 | 8, 16 |
| 145 - 275 | 16, 32 |

The phase difference is reported in a compressed way, and a corresponding reporting granularity is the target granularity, such as containing K PRBs. The value K may be configured by the network side or reported by the terminal, where a size of a first subband may be an integer multiple of K. For example, a size of subband for CSI reporting (excluding phase difference) is 32 PRBs, and the reporting granularity K of phase difference may be 4 PRBs or 2 PRBs, etc. The reporting quantity reported at the target granularity (first reporting quantity, phase difference) is used to resolve time asynchrony in a system or to eliminate a reciprocity error, improving physical downlink shared channel (PDSCH) transmission performance. Therefore, the reporting of the first reporting quantity is simultaneous with the reporting of CQI, PMI, RI, etc., corresponding to PDSCH transmission, thus requiring differentiation in the reporting granularity of different reporting quantities.

For example, when the BWP has 200 PRBs (corresponding to a third frequency domain resource), the terminal may report the phase differences corresponding to 72 PRBs (corresponding to the first frequency domain resource). When reporting the phase differences of 72 PRBs, the terminal may measure the phase differences corresponding to at most 72 PRBs, and the terminal compresses and reports the at most 72 phase differences.

In some embodiments, a specific compressed reporting procedure may include the following.

Step 1: the terminal measures the measurement resource corresponding to the first frequency domain resource to obtain the phase difference, where the phase difference is used to reflect the time synchronization error or reciprocity error.

For example, the measurement resource corresponding to the first frequency domain resource is a channel state information reference signal (CSI-RS) resource, a tracking reference signal (TRS) resource, or a synchronization signal block (SSB) resource, etc.

When performing time error measurement, the terminal may perform reception based on a reference timing configured by the network side (such as a quasi-co-location type (QCL-Type) A parameter of one of the measurement resources, i.e., a Type A parameter, including Doppler frequency domain, Doppler spread, average delay, and delay spread parameters), and measure the phase difference between every two frequency domain units (each frequency domain unit corresponds to one or more RBs, or one or more subcarriers). Taking the phase difference of two RBs as an example, assuming there are four TRPs, each TRP corresponding to a measurement resource or a measurement resource port, the frequency domain channel information measured by the terminal based on two RBs corresponding to TRP i are ${H}_{1}^{i}$ and ${H}_{2}^{i}$, respectively (assuming the terminal uses one receiving antenna for measurement, and ${H}_{1}^{i}$ and ${H}_{2}^{i}$ are both scalars), then the phase difference between two adjacent RBs at TRP i is angle( ${H}_{2}^{i} / {H}_{1}^{i}$) or angle( ${H}_{1}^{i} / {H}_{2}^{i}$), where angle(·) is a phase-taking operation. If the phases of two adjacent RBs are *e*^{*j*θ¹} and *e*^{*jθ*²}, respectively, then the phase difference may be *e*^{*jθ*¹}/*e^{jθ2} = e*^{*j(θ*1-*θ*²}).

Alternatively, for each frequency domain unit, the terminal measures the phase difference of the frequency domain channel between multiple TRPs (measurement resources or measurement resource ports). For example, if the frequency domain channel information of TRP i and TRP j in one RB are ${H}_{1}^{i}$ and ${H}_{1}^{j}$, respectively (assuming the terminal uses one receiving antenna for measurement, and ${H}_{1}^{i}$ and ${H}_{1}^{j}$ are both scalars), then the phase difference between TRP i and TRP j is angle( ${H}_{1}^{j} / {H}_{1}^{i}$) or angle( ${H}_{1}^{i} / {H}_{1}^{j}$), where angle(·) is the phase-taking operation. If the phases of two TRPs are *e*^{*j*θ¹} and *e*^{*jθ*²} , respectively, then the phase difference may be *e^{jθ1}*/*e*^{*jθ*²} = *e*^{*j(θ1-θ*²}).

When performing reciprocity error measurements, taking four TRPs as an example, each TRP corresponds to one measurement resource or one measurement resource port. The terminal measures the phase difference between the frequency domain channels of the measurement resources corresponding to two TRPs in each frequency domain unit. For example, the frequency domain channel information of TRP 1 and TRP 2 are *H*₁ and *H*₂, respectively (assuming the terminal uses one receiving antenna for measurement, and *H*₁ and *H*₂ are both scalars), indicating that the phase difference is angle(*H*₁/*H*₂) or angle(*H*₂/*H*₁). If the phases of two adjacent RBs are *e*^{*j*θ¹} and *e*^{*j*θ²}, respectively, then the phase difference may be *e*^{*jθ*¹}/*e*^{*jθ*2} *= e*^{*j(θ1-θ*2}).

Furthermore, the method in the present application is also applicable to compressed reporting of other reporting quantities, such as a frequency difference, a delay difference, an autocorrelation coefficient, etc.

The first frequency domain resource may be at least one of the following:
one or more first subbands with a best CQI quality (or SINR quality) (e.g., to be measured via CJT codebook feedback) or one or more first subbands or multiple RBs or multiple RB groups selected by the terminal;
one or more first subbands, or multiple RBs or multiple RB groups in a middle of a bandwidth;
a subband (e.g., not the last subband), or multiple RBs, or multiple RB groups with a maximum size; or
multiple subband indexes, or multiple RBs, or multiple RB groups configured by a network side.

Step 2: the terminal obtains the target granularity and determines a length of a basis vector.

In some embodiments, ways for determining the target granularity include at least one of the following.

Way 1: the terminal may determine the target granularity based on a correlation of the phase differences measured in step 1. Assuming that in step 1 the terminal calculates the phase difference of each RB, if an inner product of a vector composed of the measured values of multiple RBs (e.g., T RBs), i.e., the correlation, is greater than a certain threshold, then the terminal determines that the phase difference may be jointly reported for the multiple RBs, and the target granularity may be T RBs, or greater than T RBs. If the inner product of the vector composed of the measured values of T RBs is less than a certain threshold, the terminal determines that the target granularity is less than T RBs. Alternatively, the terminal determines the correlation based on phase changes of the measured values within multiple RBs. If the phase change between a first measured value (corresponding to a lower RB index or subcarrier number) and a last measured value (corresponding to a higher RB index or subcarrier number) within T RBs exceeds a certain threshold, the two are considered uncorrelated, and the target granularity is less than T RBs; if the phase change between the first measured value and the last measured value within T RBs is less than a certain threshold, the two are considered correlated, and the target granularity may be greater than or equal to T RBs.

Way 2: the terminal may determine the target granularity based on a value of a measured delay difference. For example, in case that the terminal determines the delay difference τ between two TRPs based on two measurement resources, the terminal can further determine the target granularity based on the value of τ, as shown in Table 2. A smaller τ value allows for a slightly larger target granularity, while a larger τ value results in a smaller target granularity. Table 3 provides an example.

**Table 2**

| τ value | Target granularity (RB) |
|---|---|
| Less than first value | *M*₁ |
| Between first value and second value | *M*₂ |
| Between second value and third value | *M*₃ |
| Between third value and fourth value | *M*₄ |

**Table 3**

| τ value (sample point or ns or us) | Target granularity (RB) |
|---|---|
| <8 | 1 |
| (8,20] | 2 |
| (20,40] | 4 |
| >40 | 8 |

Way 3: the terminal determines the target granularity based on a network side configuration or a predefined rule. For example, the target granularity is configured to the terminal through a higher layer parameter, or when the network side configures the terminal to measure and report the time error or the reciprocity error, the terminal determines that the target granularity is T RBs.

In way 1 and way 2, in case that the target granularities determined based on multiple TRPs (measurement resources) are different, the terminal uses a minimum granularity corresponding to multiple TRPs as the target granularity to ensure that the measurement quantity of all TRPs can be accurately compressed and reported.

A way for determining a length of a basis vector is that: the length of the basis vector is determined by the first frequency domain resource and the target granularity. For example, if the first frequency domain resource contains *P*₁ RBs and the target granularity contains *T* RBs, the length of the basis vector may be *P*₁/*T.*

In some embodiments, the length of the basis vector is also related to a number of reporting quantities reported by each subband. Assuming a subband reports P reporting quantities (P is configured by a higher layer parameter or determined based on a predefined rule), the length of the basis vector is a number of reporting quantities that need to be reported within the first frequency domain resource, such as *PP*₁/*T.*

Step 3: the terminal determines a frequency domain basis vector and a combining coefficient corresponding to the first frequency domain resource based on a size of the first frequency domain resource.

Step 4: the terminal reports the frequency domain basis vector and the combining coefficient to the network side device.

In some embodiments, the terminal reports a phase offset between a starting RBs (or a starting RB group) of other subbands or frequency domain resources (resources other than the first frequency domain resource) within the third frequency domain resource and a starting RB (or a starting RB group) of the first frequency domain resource reported by the terminal. This phase offset is used for phase preprocessing for the third frequency domain resource.

FIG. 3 is a first schematic diagram of compressing and reporting reporting quantities corresponding to one segment of continuous frequency domain resource according to an embodiment of the present application. As shown in FIG. 3, the grid part represents the first frequency domain resource. The terminal only reports the phase difference corresponding to the first frequency domain resource. When performing pre-compensation on the network side, the phase difference of other resources is first calculated based on the phase difference of the first frequency domain resource. Assuming that a sparsity characteristic of the phase difference for each segment is consistent, based on a correspondence between a delay difference and a phase difference, a phase of each subcarrier caused by a same delay difference is *e*^{*j*2πf}*^{k^{τ}},* where k is the frequency of the subcarrier and *τ* is a corresponding time delay. As can be seen from the formula, there is a phase offset between the phase of other resources of the third frequency domain resource and the phase of the first frequency domain resource reported by the terminal. Before compression, the terminal may determine a phase difference (offset) between each segment (each segment corresponding to one or more subbands, or one or more RBs or RB groups) and a starting position of a reported first frequency domain resource based on a measured phase (difference). Each phase offset may be quantized in 4 bits. After determining the first frequency domain resource, the terminal determines that a number of RBs included in other segments of frequency domain resource is the same as or less than the number of RBs in the first frequency domain resource (if a number of RBs in the last segment of resource is less than a number of RBs in the first frequency domain resource, a number of RBs in the other segments of resource is equal to the number of RBs in the first frequency domain resource).

The above segmentation way is preconfigured by the network side, or determined by the terminal based on a predefined rule, or the terminal determines the segmentation way and reports it to the network side.

### I. Segmentation way based on the network side configuration

For example, when configuring segmentation, the network side divides the third frequency domain resource (the frequency domain resource corresponding to the measurement resource) into O segments. The network side indicates the value of segment O, as well as a starting RB of each segment, to the terminal.

Alternatively, the network side indicates the first frequency domain resource to the terminal, allowing the terminal to determine the frequency domain resources of other segments. For example, the network side may indicate the starting RB and the number of continuous RBs of the first frequency domain resource, or the starting first subband number and the number of continuous first subbands of the first frequency domain resource to the terminal, or indicate the terminal using a way of bit mapping at the granularity of RBs or first subbands. After determining the first frequency domain resource, the terminal may determine the other segments using at least one of the following ways:
1) determine the number of continuous RBs or the number of first subbands of other segments based on the number of RBs or the number of first subbands of the first frequency domain resource; for example, the number of RBs or the number of first subbands of other segments is less than or equal to the number of RBs or the number of first subbands of the first frequency domain resource; for another example, except for the last segment, the number of RBs or the number of first subbands in each segment is equal to the number of RBs or the number of first subbands of the first frequency domain resource, and the number of RBs or the number of first subbands included in the last segment is less than the number of RBs or the number of first subbands of the first frequency domain resource;
2) determine the number O of segments based on the number of RBs or the number of subbands of the first frequency domain resource; For example, $O = \left⌈{O}_{1}/{O}_{2}\right⌉$, where *O*₁ and *O*₂ are the number of RBs or the number of subbands included in the first frequency domain resource, and the number of RBs or the number of first subbands included in the third frequency domain resource, respectively, where $\left⌈⋅\right⌉$ is a round-up operation; or
3) determine a starting RB index or a starting first subband index of other segments based on the number of RBs or the number *O*₂ of first subbands of the first frequency domain resource; for example, the starting RB index or the starting first subband index of other segments is *tO*₂, where *t* is a non-negative integer or a positive integer.

### Segmentation way based on a predefined rule.

In the present application, the first frequency domain resources and other frequency domain resources are determined by the terminal based on a predefined rule, such as a number O of segments and/or a number of RBs or a number of first subbands included in each segment is pre-specified in a protocol. For example, the segmentation way is similar to a way of segmenting a first subband, see Table 4 and Table 5.

**Table 4. The number of RBs or the number of first subbands included in each segment corresponding to the size of the third frequency domain resource**

| Size of the third frequency domain resource (number of RBs) | Number of RBs or number of first subbands (or number of segments) |
|---|---|
| Less than a first value | 2 |
| Between a first value and a second value | 4 |
| Between a second value and a third value | 6 |
| Between a third value and a fourth value | 8 |

**Table 5. The number of segments corresponding to the size of the third frequency domain resource**

| Size of the third frequency domain resource (number of RBs) | Number of RBs or number of first subbands (or number of segments) |
|---|---|
| Less than a first value | 1 |
| Between a first value and a second value | 2 |
| Between a second value and a third value | 4 |
| Between a third value and a fourth value | 8 |

The terminal determines the frequency domain resource corresponding to each segment based on the predefined number of RBs or the predefined number of first subbands included in each segment, or the predefined number of segments.

### II. Segmentation way determined by the terminal.

In the way provided by the present application, the terminal determines the number of RBs or the number of first subbands of the first frequency domain resource based on the target granularity. Then, the terminal indicates the starting RB index or the starting first subband index of the first frequency domain resource to the network side. In some embodiments, the terminal indicates the segment number O, or the number of RBs or the number of first subbands included in the first frequency domain resource to the network side. The network side may use a way similar to that in the "segmentation way based on the network side configuration" to determine the starting RB index or the starting first subband index, and the number of RBs or the number of first subbands included in other frequency domain resources (segments). In case that the target granularity is small, it indicates that the terminal will report more phase differences. To reduce the length of the basis vector and feedback overhead, the terminal may determine a larger number of segments and report only one segment of frequency domain resource (i.e., the first frequency domain resource). Correspondingly, in case that the target granularity is large, it indicates that the terminal will report fewer phase differences. To ensure feedback accuracy, the terminal may determine a larger number of segments and still report only one segment of frequency domain resource (i.e., the first frequency domain resource).

### III. Network side preprocessing way

The network side recovers an uncompressed phase difference on the first frequency domain resource based on the frequency domain compression report from the terminal. For example, multiple phase differences within the first frequency domain resource are determined based on the target granularity, the length of the basis vector, etc. Assuming the target granularity is 2 RBs, each phase difference corresponds to 2 RBs of resources.

The network side preprocesses (multiplying by a sending signal and then sending; in fact, this operation can also be seen as performing preprocessing on a precoding matrix, that is, multiplying the uncompressed phase differences with the precoding matrix to form a new transmission precoding matrix) a downlink transmission (such as a PDSCH transmission or other reference signal transmissions) corresponding to the first frequency domain resource using the uncompressed phase difference recovered by the terminal.

For other segments, preprocessing is performed using the recovered uncompressed phase difference and a phase offset reported from the terminal. For example, the network side determines each phase difference in other segments as each uncompressed phase difference corresponding to the first frequency domain resource multiplied by the phase offset; for a last segment, the phase difference is determined based on first N recovered phase differences of the first frequency domain resource and the phase offset.

Embodiment 2: the terminal compresses and reports the phase differences corresponding to multiple frequency domain resources separately.

Option 1: each frequency domain resource uses a same frequency domain (FD) basis, and the combining coefficients of different frequency domain resources are reported separately.

Reporting way for a strongest coefficient value of each segment: the strongest coefficient and other non-zero coefficients are quantized using different ways. For example, other non-zero coefficients are quantized using relevant quantization methods (maximum amplitude less than 1), and the strongest coefficient is quantized within the interval [1, a], such as the value of a is 1.5, 2, 4, 10, etc., which is predefined by a protocol or configured by the network side.

In some embodiments, the terminal reports the phase offset value of a frequency domain basis vector set of each segment of frequency domain resource (used when the frequency domain basis vector set offsets of each segment of frequency domain resource are different, and the same frequency domain basis vector set is reported to reduce overhead).

The phase offset value may be a value of a cyclic shift of the frequency domain basis vector in a phase rotation matrix.

Option 2: each frequency domain resource uses a same FD basis, and the combining coefficients of different frequency domain resources are reported jointly.

The way for jointly reporting the strongest coefficient values for each segment include:
the terminal performs normalization using a coefficient with a largest amplitude among all segments; the coefficient with the largest amplitude does not need to be reported; strongest coefficients of other segments may be quantized and reported using relevant amplitude quantization methods (i.e., amplitude less than 1); or
the terminal performs normalization using a coefficient with a smallest amplitude among all segments; a strongest coefficient of each segment of frequency domain resource is quantized within an interval [1, a].

Option 3: different frequency domain resources use different FD bases, and the combining coefficients of different frequency domain resources are reported separately.

The reporting way for combining coefficients is the same as in option 1.

Option 4: different frequency domain resources use different FD bases, and the combining coefficients of different frequency domain resources are reported jointly.

The reporting way for the frequency domain basis vector set is the same as in option 3, and the reporting way for combining coefficients is the same as in option 2.

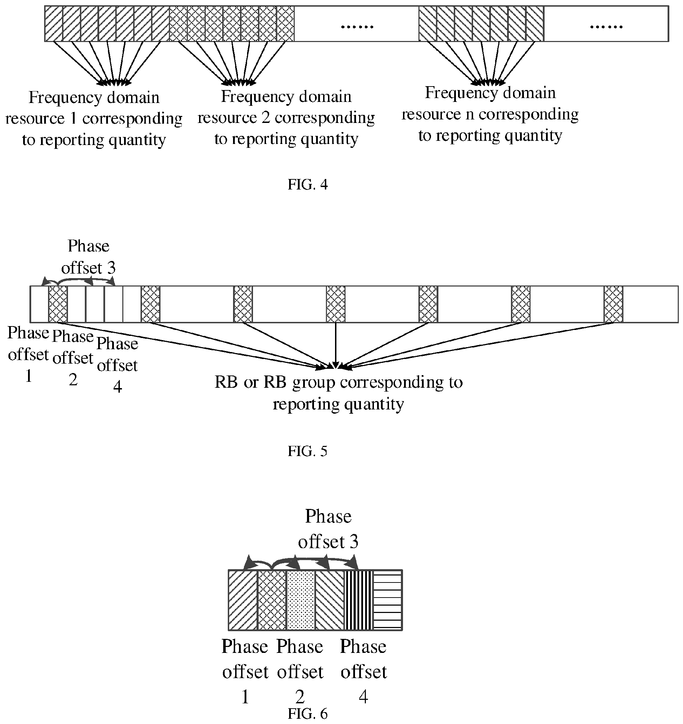

In some embodiments, to ensure feedback accuracy, the terminal compresses the phase difference corresponding to each segment of frequency domain resource and then reports it. FIG. 4 is a schematic diagram of compressing and reporting reporting quantities corresponding to multiple segments of continuous frequency domain resources, respectively, according to an embodiment of the present application. As shown in FIG. 4, the way of segmenting the frequency domain resource is the same as in Embodiment 1. Since each segment is compressed separately, the length of the basis vector is shorter, significantly reducing the processing complexity of the terminal compared to a solution of jointly compressing and reporting the entire measurement resource.

In some embodiments, at least one of the following ways may be used for compression reporting.

Option 1: each frequency domain resource uses the same FD basis, the combining coefficient of each segment of frequency domain resource is different, and the combining coefficients of different frequency domain resources are reported separately.

In the related art, since the entire frequency domain resource is compressed and reported as a whole (i.e., without segmentation), the terminal does not need to report the strongest coefficient in the combining coefficients (whose amplitude is predefined as 1), but only a position of the strongest coefficient among multiple non-zero coefficients. In segment-based reporting, although each segment reports the combining coefficients separately, assuming that the strongest coefficient in the combining coefficients of each segment is always 1 is unreasonable. Therefore, each frequency domain resource needs to report the amplitude and position of the strongest coefficient separately.

In this way, each reporting quantity may use single-layer (data stream) transmission, so each segment of frequency domain resource only reports the amplitude and position of one strongest coefficient.

One possible reporting order for the reporting quantities is: reporting of a frequency domain basis vector applicable to all frequency domain resources, a combining coefficient of a first frequency domain resource, a combining coefficient of a second frequency domain resource, ..., a combining coefficient of a last frequency domain resource.

A way for determining the length of the basis vector is consistent with that in Embodiment 1. The number of basis vectors may be configured by a higher layer signaling. When the length of the basis vector is *U*₁ and the number of basis vectors is *U*₂, $\left⌈{log}_{2} {C}_{{U}_{1}}^{{U}_{2}}\right⌉$ bits can be used, where ${C}_{{U}_{1}}^{{U}_{2}}$ represents a number of combinations when selecting *U*₂ frequency domain basis vectors from *U*₁ frequency domain basis vectors. If a number of RBs, a number of RB groups, or a number of first subbands of the last frequency domain resource is too small (e.g., less than a value predefined in a protocol), the combining coefficient may also not be reported, or combining coefficient may be reported in an uncompressed way. For example, when the terminal feeds back the reported quantity corresponding to each target granularity (e.g., phase difference), the reported quantities corresponding to multiple target granularities are reported without compression.

The reporting of the combining coefficient includes at least the reporting of non-zero coefficient values and the reporting of non-zero coefficient positions (i.e., indicating the frequency domain basis vector or spatial basis vector corresponding to the non-zero coefficient), and also the reporting of the strongest coefficient value and the strongest coefficient position.

When reporting the strongest coefficient value, the strongest coefficient and other non-zero coefficients are quantized using different ways. For example, other non-zero coefficients are quantized using relevant quantization methods, that is, the maximum amplitude of each non-zero coefficient is 1. Since the strongest coefficient value is larger than other non-zero values, the strongest coefficient value can be quantized within the interval [1, a], such as the value of a is 1.5, 2, 4, 10, etc., which predefined by a protocol or configured by the network side.

The position reporting of the strongest coefficient for each frequency domain resource is consistent with the related art. The terminal reports the spatial basis vector and/or the frequency basis vector corresponding to the strongest coefficient of the segment of frequency domain resource.

In some cases, the basis vectors selected for each frequency domain resource may be the same, but the frequency basis vectors corresponding to the strongest coefficients may be different. In this case, the terminal may additionally report the phase offset value for each frequency domain resource to ensure that the basis vectors (including their order) of each frequency domain resource are the same, reducing feedback overhead. The phase offset value refers to an indication corresponding to the phase rotation matrix (i.e., cyclic shift operation) in the related art. For example, in case that a second segment of frequency domain resource is cyclically shifted one time to the left relative to the frequency domain basis vector set of the first segment of frequency domain resource, the phase offset value may be represented by -1. In case that a segment of third frequency domain resource is cyclically shifted four times to the right relative to the frequency domain basis vector set of the first segment of frequency domain resource, the phase offset value may be represented by +4. The reverse is also possible. For example, a cyclic shift to the left is represented by a positive value, and a cyclic shift to the right is represented by a negative value.

An n-th segment of frequency domain resource may be used as a reference. Other segments of frequency domain resource determine a number of bits that their frequency domain basis vector sets offset relative to the n-th segment of frequency domain resource. The value of n may be predefined by a protocol, configured by the network side, or indicated to the network side by the terminal. For example, the terminal may select a segment of reference frequency domain resource, ensuring that the offset values of the frequency domain basis vector sets of other frequency domain resources relative to the reference frequency domain resource are all positive or all negative, that is, eliminating the positive and negative signs of offset values from reporting. In this case, an index of the segment of the reference frequency domain resource does not need to be reported; the network side only needs to recover the frequency domain basis vector sets of each frequency domain resource based on the phase offset values of each segment of frequency domain resource.

Option 2: all frequency domain resources use the same FD basis, the combining coefficient of each segment of frequency domain resource is different, and the combining coefficients of different frequency domain resources are reported jointly.

The reporting order of the reporting quantities is similar to way 1. When reporting the combining coefficients, the terminal may jointly process the non-zero coefficients of each segment of frequency domain resource. For example, it can normalize the coefficient with the largest amplitude across all segments to ensure that the strongest combining coefficient in each segment of frequency domain resource is less than or equal to 1. In this case, the strongest coefficient in each segment may be quantized and reported using the relevant amplitude quantization method. Regarding the coefficient with the largest amplitude across all segments, the terminal may report the amplitude index corresponding to the value 1 (e.g., 3-bit quantization corresponds to index 7, 4-bit quantization corresponds to index 15), or the terminal can choose not to report the amplitude index but instead report the index of the segment of frequency domain resource corresponding to the strongest coefficient with the largest amplitude.

In addition, normalization may be performed using the coefficient with the smallest amplitude across all segments, ensuring that all other non-zero coefficients in each segment of frequency domain resource, except for the strongest coefficient, are within the value of 1. This guarantees sufficient quantization of other non-zero coefficients (compared to the solution using the coefficient with the largest amplitude across all segments, the other non-zero coefficients have larger values and higher precision). The strongest coefficient in each segment of frequency domain resource is quantized using other ways, such as using a value greater than 1, consistent with option 1, for quantization, e.g., quantization within the range [1, a].

Option 3: different FD bases are used for each frequency domain resource, the combining coefficients for each frequency domain resource segment are also different, and the combining coefficients for different frequency domain resources are reported independently.

In this way, the terminal needs to report the frequency domain basis vector set corresponding to each segment of frequency domain resource. The reporting order may be: a frequency domain basis vector set of one frequency domain resource, a frequency domain basis vector set of a second frequency domain resource, ..., a frequency domain basis vector set of a last frequency domain resource, a combining coefficient of a first frequency domain resource, a combining coefficient of the second frequency domain resource, ..., a combining coefficient of the last frequency domain resource.

The reporting way for the combining coefficient is the same as in option 1.

Option 4: different FD bases are used for each frequency domain resource, the combining coefficients for each frequency domain resource segment are also different, and the combining coefficients for different frequency domain resources are reported jointly.

In this way, the reporting way for the frequency domain basis vector set is the same as option 3, and the reporting way for the combining coefficient is the same as option 2.

In some embodiments, a network side preprocessing way includes:
the network side recovers an uncompressed phase difference on each segment of frequency domain resource based on a frequency domain compression report from a terminal. For example, multiple phase differences within each frequency domain resource are determined based on the target granularity, the length of basis vector, etc. Assuming the target granularity is 2 RBs, each phase difference corresponds to a resource of 2 RBs; and
the network side preprocesses (multiplying by a sending signal and then sending; in fact, this operation may also be regarded as preprocessing a precoding matrix, i.e., multiplying the uncompressed phase difference with the precoding matrix to form a new transmission precoding matrix) the downlink transmission (such as PDSCH transmission, or other reference signal transmission) corresponding to each frequency domain resource using the recovered uncompressed phase difference from the terminal.

When different TRPs all use segmented reporting, the reporting quantities corresponding to different TRPs within the same segment of frequency domain may be reported using at least one of the following ways:
option 1: the reporting quantities corresponding to each TRP (measurement resource) use the same FD basis, and the combining coefficients of different TRPs (measurement resources) are reported separately;
option 2: the reporting quantities corresponding to each TRP (measurement resource) use the same FD basis, and the combining coefficients of different TRPs (measurement resources) are reported jointly;
option 3: the reporting quantities corresponding to each TRP (measurement resource) use different FD bases, and the combining coefficients of different TRPs (measurement resources) are reported separately; or
option 4: the reporting quantities corresponding to each TRP (measurement resource) use different FD bases, and the combining coefficients of different TRPs (measurement resources) are reported jointly.

Embodiment 3: the terminal performs phase difference compression reporting on multiple target RBs or target RB groups in multiple segments of frequency domain resource.

The reporting quantities are compressed and reported by periodically selecting with intervals some frequency domain resources. An indication way for the target RB or target RB group selected by the network side or the terminal includes at least one of the following:
1) indicating the index of the starting RB or RB group (offset relative to the starting RB of the measurement bandwidth, or offset relative to the CRB);
2) indicating the RB or RB group interval (different from the target granularity, which may be an integer multiple of the target granularity); or
3) the terminal reports an RB or RB group to which the phase difference applies (e.g., the target granularity).

The frequency domain resource corresponding to the reporting quantity may be configured by the network side or predefined by a protocol.

The network side configures the terminal to report for the n-th RB group within each frequency domain resource segment.

The reporting RB group related information configured by the network side is at least one of the following:
an index of a starting RB or RB group (an index relative to a starting RB of a measurement bandwidth, or an index relative to a CRB);
a frequency domain interval between selected target RB groups in every two segments of frequency domain resource (i.e., a number of RBs, which differs from the target granularity and may be an integer multiple of the target granularity); or
a protocol pre-determines that the terminal performs reporting for an n-th RB group within each segment of frequency domain resource.

In some embodiments, the phase offset reported by the terminal between other RB groups and a selected target RB group includes at least one of the following:
a phase offset between each RB group and the selected target RB group; or
a phase offset between adjacent RB groups and the selected target RB group, assuming that the offset values between any two RB groups are the same, to reduce feedback overhead.

In this embodiment, the segmentation way is consistent with embodiment 1 and embodiment 2. The terminal selects one RB or RB group within each segment of frequency domain resource for phase difference compression reporting. One RB group may be the number of RBs corresponding to the target granularity, i.e., one phase difference is reported for each segment of frequency domain resource; or one RB group may be the number of RBs corresponding to multiple target granularities, i.e., multiple phase differences are reported for each segment of frequency domain resource.

FIG. 5 is a first schematic diagram of selecting with intervals some frequency domain resources for compressing and reporting reporting quantities according to an embodiment of the present application. As shown in FIG. 5, the grid portion represents the selected RB or RB group, i.e., the RB or RB group for reporting the reporting quantities. The frequency domain resource(i.e., the grid portion in FIG. 5) corresponding to the reporting quantity may be pre-defined by a protocol. For example, the network side indicates the terminal to perform reporting for the first RB group within each segment of frequency domain resource (in which case the target granularity is one RB group), or the protocol pre-determines that the terminal performs reporting for the first RB group within each segment of frequency domain resource.

For example, when the network side configures the RB group for reporting, at least one piece of the following information may be configured: the index of the starting RB or RB group (the index relative to the starting RB of the measurement bandwidth, or the index relative to the CRB), i.e., the RB group corresponding to the first grid segment in FIG. 3; or, a frequency domain interval (i.e., the number of RBs, which is different from the target granularity and may be an integer multiple of the target granularity) between the selected target RB groups in every two segments of frequency domain resource.

When the terminal performs compressed reporting, the selected target RB groups in all segments of frequency domain resource are compressed and reported jointly, and the compression way and the reporting way are consistent with related art.

Assuming that one RB group corresponding to the target granularity is selected in each segment of frequency domain resource for reporting, and an interval between the selected RB groups in multiple segments of frequency domain resource is the same. The frequency domain characteristics of other RB groups that are not reported may be consistent with those of the selected target RB groups. However, since the starting RBs of each segment of frequency domain resource are different, the absolute phase difference is different. For network side preprocessing, the terminal also needs to report the phase offset between other RBs or RB groups (unselected RBs or RB groups) and the selected target RB or RB group. Taking the first segment of frequency domain resource as an example, the phase offset between the selected target RB group (grid portion) and other RB groups is shown in FIG. 6. FIG. 6 is a schematic diagram of reporting a phase offset between an unselected resource block (RB) or RB group and a selected RB or RB group according to an embodiment of the present application.

In this way, the phase offset reported by the terminal includes at least one of the following:
the phase offset between each RB group and the selected target RB group; or
the phase offset between adjacent RB groups and the selected target RB group, assuming that the offset values between any two RB groups are the same, reducing feedback overhead.

The network side preprocessing way includes:
the network side recovers the uncompressed phase difference corresponding to the selected target RB group based on the frequency domain compression report from the terminal, such as determining multiple phase differences based on the target granularity, the length of basis vector, etc.;
the network side preprocesses (multiplying by a sending signal and then sending; in fact, this operation may also be regarded as preprocessing a precoding matrix, i.e., multiplying the uncompressed phase difference with the precoding matrix to form a new transmission precoding matrix) the downlink transmission (such as PDSCH transmission, or other reference signal transmission) corresponding to the reported RB group using the recovered uncompressed phase difference from the terminal; and
for other RB groups, preprocessing is performed using the recovered uncompressed phase difference and the phase offset reported from the terminal; for example, the network side determines that each phase difference in the frequency domain resource (RB group) corresponding to the diagonal portion in FIG. 6 is each phase difference in the frequency domain resources (RB group) corresponding to the grid portion multiplied by the phase offset 1.

### Embodiment 4: combination solution

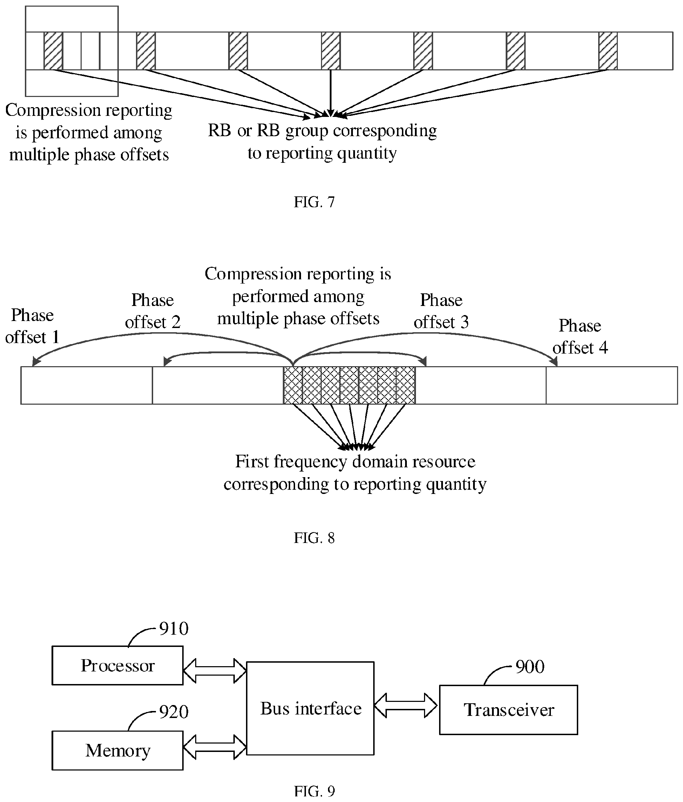

A combination of multiple compression reporting ways from embodiments 1 to 3 may be considered. For example, the terminal may report a corresponding reporting quantity within a selected discontinuous RB group based on the way in embodiment 3. When reporting the phase offset, multiple reporting quantities (phase offsets) within one segment of frequency domain resource may also be compressed and reported (similar to the way in embodiment 1, only the physical meaning of the reporting quantity is different; the reporting quantity in embodiment 1 may be a phase difference), as shown in FIG. 7. FIG. 7 is a second schematic diagram of selecting with intervals some frequency domain resources for compressing and reporting reporting quantities according to an embodiment of the present application.

For another example, the terminal may report the reporting quantity corresponding to the first frequency domain resource based on the way in embodiment 1. In addition, each phase offset is compressed and reported (similar to the way in embodiment 3, only the physical meaning of the reporting quantity is different; the reporting quantity in embodiment 3 may be a phase difference), as shown in FIG. 8. FIG. 8 is a second schematic diagram of compressing and reporting reporting quantities corresponding to one segment of continuous frequency domain resource according to an embodiment of the present application.

When multiple ways are used for joint reporting, the frequency domain basis vector sets of different compression reporting ways (such as the first reporting quantity (phase difference) reporting and the second reporting quantity (phase offset) reporting in FIG. 7) may be the same or different. A way similar to that in embodiment 2 may be used for reporting, as follows:
option 1: for the first reporting quantity and the second reporting quantity, the same frequency domain basis vector is reported, the combining coefficients are different, and the combining coefficients of different reporting quantities are reported separately;
option 2: for the first reporting quantity and the second reporting quantity, the same frequency domain basis vector is reported, the combining coefficients are different, and the combining coefficients of different reporting quantities are reported jointly;
option 3: for the first reporting quantity and the second reporting quantity, different frequency domain basis vectors are reported, the combining coefficients are different, and the combining coefficients of different reporting quantities are reported separately; or
option 4: for the first reporting quantity and the second reporting quantity, different frequency domain basis vectors are reported, the combining coefficients are different, and the combining coefficients of different reporting quantities are reported jointly.

In the method for reporting information provided in the embodiments of the present application, the terminal reports the first reporting quantity using the target granularity, and the terminal uses a segmentation way for frequency domain compression reporting. The terminal may use a shorter frequency domain basis vector for compression reporting, reducing feedback overhead and/or terminal processing complexity.

### Embodiment 5: compression reporting for different measurement resources

In an embodiment, jointly frequency domain compression reporting is performed for multiple TRPs. During CJT transmission, in addition to using the multiple compression reporting ways in embodiments 1 to 4, the terminal also needs to consider the phase difference reporting of multiple TRPs. The specific reporting way is as follows.

Way 1: within each RB or RB group or first subband or second subband, the terminal measures the phase difference between each measurement resource (TRP) and a reference measurement resource (reference TRP). The phase difference corresponding to each TRP is reported using the ways in embodiments 1 to 4.

Way 2: in each RB or RB group or first subband or second subband, the terminal measures the phase difference between different RBs of each measurement resource (TRP), and the phase difference corresponding to each TRP is reported using the ways in embodiments 1 to 4.

FIG. 9 is a schematic structural diagram of a terminal according to an embodiment of the present application. As shown in FIG. 9, the terminal includes a memory 920, a transceiver 900 and a processor 910,
where the memory 920 is used for storing a computer program, the transceiver 900 is used for receiving and sending data under control of the processor 910, and the processor 910 is used for reading the computer program in the memory 920 and performing the following operations:
determining a frequency domain basis vector and a combining coefficient corresponding to a first frequency domain resource based on a size of the first frequency domain resource, where the first frequency domain resource is one or more segments of frequency domain resources within a measurement bandwidth; and
reporting the frequency domain basis vector and the combining coefficient to a network side device.

In an embodiment, the transceiver 900 is used for receiving and sending data under control of the processor 910.

In FIG. 9, a bus architecture may include any number of interconnected buses and bridges, which are linked together through various circuits of one or more processors represented by the processor 910 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 900 may include multiple elements, i.e., including a transmitter and a receiver, units for providing communication with various other devices over transmission media including wireless channels, wired channels, fiber optic cables, and the like. The processor 910 is responsible for managing the bus architecture and general processing, and the memory 920 may store data used by the processor 910 when performing operations.

The processor 910 may be a central processing unit (CPU), an application specific integrated circuit (ASIC), a field-programmable gate array (FPGA), or a complex programmable logic device (CPLD), the processor may also use a multi-core architecture.

In some embodiments, determining the frequency domain basis vector and the combining coefficient corresponding to the first frequency domain resource based on the size of the first frequency domain resource includes:
determining the frequency domain basis vector and the combining coefficient based on the size of the first frequency domain resource and a target granularity, where the target granularity is less than or equal to a reporting granularity of channel state information (CSI).

In some embodiments, reporting the frequency domain basis vector and the combining coefficient to the network side device includes:
reporting the frequency domain basis vector and the combining coefficient to the network side device based on the target granularity.

In some embodiments, the first frequency domain resource includes at least one of following:
a segment of continuous frequency domain resource;
multiple segments of frequency domain resources; or
multiple target resource blocks (RBs) or target resource block (RB) groups among multiple segments of frequency domain resources.

In some embodiments, the operations further include:
reporting a phase offset between a second frequency domain resource and the first frequency domain resource to the network side device, where the second frequency domain resource is a frequency domain resource other than the first frequency domain resource within the measurement bandwidth.

In some embodiments, reporting the frequency domain basis vector and the combining coefficient to the network side device includes:
reporting a frequency domain basis vector and a combining coefficient corresponding to the multiple segments of frequency domain resources using a target reporting method; or reporting a frequency domain basis vector and a combining coefficient corresponding to multiple reporting quantities using a target reporting method; or reporting a frequency domain basis vector and a combining coefficient corresponding to multiple measurement resources using a target reporting method, where the target reporting method includes at least one of following:
reporting a same frequency domain basis vector among frequency domain basis vectors corresponding to different segments of frequency domain resources, and reporting combining coefficients of different segments of frequency domain resources separately; or reporting a same frequency domain basis vector among frequency domain basis vectors corresponding to different reporting quantities, and reporting combining coefficients of different reporting quantities separately; or reporting a same frequency domain basis vector among frequency domain basis vectors corresponding to different measurement resources, and reporting combining coefficients of different measurement resources separately;
reporting a same frequency domain basis vector among frequency domain basis vectors corresponding to different segments of frequency domain resources, and reporting combining coefficients of different segments of frequency domain resources jointly; or reporting a same frequency domain basis vector among frequency domain basis vectors corresponding to different reporting quantities, and reporting combining coefficients of different reporting quantities jointly; or reporting a same frequency domain basis vector among frequency domain basis vectors corresponding to different measurement resources, and reporting combining coefficients of different measurement resources jointly;
reporting different frequency domain basis vectors among frequency domain basis vectors corresponding to different segments of frequency domain resources, and reporting combining coefficients of different segments of frequency domain resources separately; or reporting different frequency domain basis vectors among frequency domain basis vectors corresponding to different reporting quantities, and reporting combining coefficients of different reporting quantities separately; or reporting different frequency domain basis vectors among frequency domain basis vectors corresponding to different measurement resources, and reporting combining coefficients of different measurement resources separately; or
reporting different frequency domain basis vectors among frequency domain basis vectors corresponding to different segments of frequency domain resources, and reporting combining coefficients of different segments of frequency domain resources jointly; or reporting different frequency domain basis vectors among frequency domain basis vectors corresponding to different reporting quantities, and reporting combining coefficients of different reporting quantities jointly; or reporting different frequency domain basis vectors among frequency domain basis vectors corresponding to different measurement resources, and reporting combining coefficients of different measurement resources jointly;
where the combining coefficient includes at least one of: a non-zero coefficient value, or a maximum coefficient value.

In some embodiments, the operations further include:
in case that the first frequency domain resource includes multiple target RB groups in multiple segments of frequency domain resources, reporting phase offsets between other RB groups besides the target RB group and the target RB groups within each segment of frequency domain resource to the network side device, or reporting phase offsets between adjacent RB groups of the target RB group and the target RB groups within each segment of frequency domain resource to the network side device.

In some embodiments, the operations further include at least one of following:
determining the first frequency domain resource based on a number of segments and an index of a starting RB or RB group within each segment of frequency domain resource indicated by the network side device; or determining other segments of frequency domain resources in the first frequency domain resource based on one segment of frequency domain resource in the first frequency domain resource indicated by the network side device;
determining the first frequency domain resource based on a predefined number of segments and/or a predefined number of RBs or first subbands included in each segment; or
determining the first frequency domain resource based on a target granularity.

It should be noted here that the above terminal provided by the embodiments of the present application may implement all the method steps implemented by the above method embodiments performed by a terminal, and may achieve the same effect. The same parts and beneficial effects as the same method embodiments are not repeated in the present application.

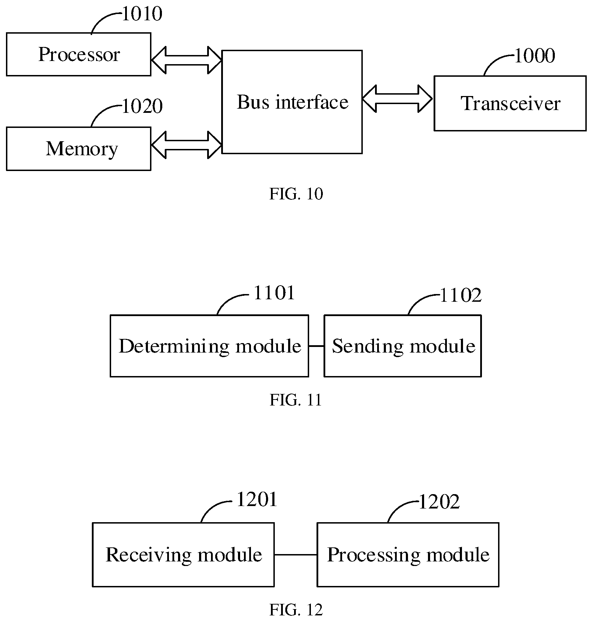

FIG. 10 is a schematic structural diagram of a network side device according to an embodiment of the present application. As shown in FIG. 10, the network side device includes a memory 1020, a transceiver 1000 and a processor 1010,
where the memory 1020 is used for storing a computer program, the transceiver 1000 is used for receiving and sending data under control of the processor 1010, and the processor 1010 is used for reading the computer program in the memory 1020 and performing the following operations:
receiving a frequency domain basis vector and a combining coefficient corresponding to a first frequency domain resource reported from a terminal, where the first frequency domain resource is one or more segments of frequency domain resources within a measurement bandwidth; and
performing preprocessing on downlink sending based on the frequency domain basis vector and the combining coefficient corresponding to the first frequency domain resource, where the preprocessing is used to eliminate a time synchronization error or a reciprocity error.

In an embodiment, the transceiver 1000 is used for receiving and sending data under control of the processor 1010.

In FIG. 10, a bus architecture may include any number of interconnected buses and bridges, which are linked together through various circuits of one or more processors represented by the processor 1010 and one or more memories represented by the memory 1020. The bus architecture may also link together various other circuits, such as peripherals, voltage regulators, and power management circuits, etc., which are well known in the art, and therefore are not further described in the present application. The bus interface provides an interface. The transceiver 1000 may include multiple elements, i.e., including a transmitter and a receiver, units for providing communication with various other devices over transmission media including wireless channels, wired channels, fiber optic cables, and the like. The processor 1010 is responsible for managing the bus architecture and general processing, and the memory 1020 may store data used by the processor 1010 when performing operations.

The processor 1010 may be a central processing unit (CPU), an application specific integrated circuit (ASIC), a field-programmable gate array (FPGA), or a complex programmable logic device (CPLD), the processor may also use a multi-core architecture.

In some embodiments, receiving the frequency domain basis vector and the combining coefficient corresponding to the first frequency domain resource reported from the terminal includes:
receiving the frequency domain basis vector and the combining coefficient corresponding to the first frequency domain resource reported from the terminal based on a target granularity, where the target granularity is less than or equal to a reporting granularity of channel state information (CSI).

In some embodiments, the first frequency domain resource includes at least one of following:
a segment of continuous frequency domain resource;
multiple segments of frequency domain resources; or
multiple target resource blocks (RBs) or target resource block (RB) groups among multiple segments of frequency domain resources.

In some embodiments, the operations further include:
receiving a phase offset between a second frequency domain resource and the first frequency domain resource reported from the terminal, where the second frequency domain resource is a frequency domain resource other than the first frequency domain resource within the measurement bandwidth.

It should be noted here that the above network side device provided by the embodiments of the present application may implement all the method steps implemented by the above method embodiments performed by a network side device, and may achieve the same effect. The same parts and beneficial effects as the same method embodiments are not repeated in the present application.

An embodiment of the present application further provides an apparatus for reporting information, which may reduce terminal feedback overhead and reduce terminal processing complexity.

The methods and apparatuses are based on the same conception. Since the methods and the apparatuses adopt similar principles to solve problems, as for implementations of the apparatuses and the methods, reference may be made to each other, and repeated contents are not elaborated herein.

FIG. 11 is a first schematic structural diagram of an apparatus for reporting information according to an embodiment of the present application. As shown in FIG. 11, the apparatus for reporting information includes a determining module 1101 and a sending module 1102, where
the determining module 1101 is used for determining a frequency domain basis vector and a combining coefficient corresponding to a first frequency domain resource based on a size of the first frequency domain resource, where the first frequency domain resource is one or more segments of frequency domain resources within a measurement bandwidth; and
the sending module 1102 is used for reporting the frequency domain basis vector and the combining coefficient to a network side device.

In the apparatus for reporting information, the terminal and the network side device provided by the embodiments of the present application, by using a frequency domain resource segmentation way, a first frequency domain resource is one or more segments of frequency domain resources within a measurement bandwidth; first, a frequency domain basis vector and a combining coefficient corresponding to the first frequency domain resource is determined based on a size of the first frequency domain resource; then, the frequency domain basis vector and the combining coefficient corresponding to the first frequency domain resource (i.e., the segmented frequency domain resource) are reported. Since the first frequency domain resource is one or more segments of frequency domain resources within the measurement bandwidth, rather than the entire measurement bandwidth, a length of the frequency domain basis vector may be shortened, reducing terminal feedback overhead and terminal processing complexity.

In some embodiments, the determining module 1101 is used for:
determining the frequency domain basis vector and the combining coefficient based on the size of the first frequency domain resource and a target granularity, where the target granularity is less than or equal to a reporting granularity of channel state information (CSI).

In some embodiments, the sending module 1102 is used for:
reporting the frequency domain basis vector and the combining coefficient to the network side device based on the target granularity.

In some embodiments, the target granularity is determined based on at least one of following:
a correlation of a phase difference corresponding to the first frequency domain resource;
a delay difference corresponding to the first frequency domain resource and a first mapping relationship, where the first mapping relationship is used to indicate a correspondence between the delay difference and the target granularity; or
a network side configuration or a predefined rule.

In some embodiments, the first frequency domain resource includes at least one of following:
a segment of continuous frequency domain resource;
multiple segments of frequency domain resources; or
multiple target resource blocks (RBs) or target resource block (RB) groups among multiple segments of frequency domain resources.

In some embodiments, the first frequency domain resource includes at least one of following:
one or more subbands with a channel quality indicator (CQI) greater than a first threshold;
one or more subbands with a signal to interference noise ratio (SINR) greater than a second threshold;
one or more subbands, or multiple resource blocks (RBs), or multiple resource block (RB) groups selected by the terminal;
one or more subbands, or multiple resource blocks (RBs), or multiple resource block (RB) groups in a middle of a bandwidth;
a subband, or multiple resource blocks (RBs), or multiple resource block (RB) groups with a maximum size; or
multiple subband indexes, or multiple resource blocks (RBs), or multiple resource block (RB) groups configured by a network side.

In some embodiments, the sending module 1102 is further used for:
reporting a phase offset between a second frequency domain resource and the first frequency domain resource to the network side device, where the second frequency domain resource is a frequency domain resource other than the first frequency domain resource within the measurement bandwidth.

In some embodiments, the sending module 1102 is further used for:
reporting a frequency domain basis vector and a combining coefficient corresponding to the multiple segments of frequency domain resources using a target reporting method; or reporting a frequency domain basis vector and a combining coefficient corresponding to multiple reporting quantities using a target reporting method; or reporting a frequency domain basis vector and a combining coefficient corresponding to multiple measurement resources using a target reporting method, where the target reporting method includes at least one of following:
reporting a same frequency domain basis vector among frequency domain basis vectors corresponding to different segments of frequency domain resources, and reporting combining coefficients of different segments of frequency domain resources separately; or reporting a same frequency domain basis vector among frequency domain basis vectors corresponding to different reporting quantities, and reporting combining coefficients of different reporting quantities separately; or reporting a same frequency domain basis vector among frequency domain basis vectors corresponding to different measurement resources, and reporting combining coefficients of different measurement resources separately;
reporting a same frequency domain basis vector among frequency domain basis vectors corresponding to different segments of frequency domain resources, and reporting combining coefficients of different segments of frequency domain resources jointly; or reporting a same frequency domain basis vector among frequency domain basis vectors corresponding to different reporting quantities, and reporting combining coefficients of different reporting quantities jointly; or reporting a same frequency domain basis vector among frequency domain basis vectors corresponding to different measurement resources, and reporting combining coefficients of different measurement resources jointly;
reporting different frequency domain basis vectors among frequency domain basis vectors corresponding to different segments of frequency domain resources, and reporting combining coefficients of different segments of frequency domain resources separately; or reporting different frequency domain basis vectors among frequency domain basis vectors corresponding to different reporting quantities, and reporting combining coefficients of different reporting quantities separately; or reporting different frequency domain basis vectors among frequency domain basis vectors corresponding to different measurement resources, and reporting combining coefficients of different measurement resources separately; or
reporting different frequency domain basis vectors among frequency domain basis vectors corresponding to different segments of frequency domain resources, and reporting combining coefficients of different segments of frequency domain resources jointly; or reporting different frequency domain basis vectors among frequency domain basis vectors corresponding to different reporting quantities, and reporting combining coefficients of different reporting quantities jointly; or reporting different frequency domain basis vectors among frequency domain basis vectors corresponding to different measurement resources, and reporting combining coefficients of different measurement resources jointly;
where the combining coefficient includes at least one of: a non-zero coefficient value, or a maximum coefficient value.

In some embodiments, a quantization method of the combining coefficient includes at least one of following:
performing quantization within a first interval on a maximum coefficient corresponding to each segment of frequency domain resource, or each reporting quantity, or each measurement resource, and performing quantization within a second interval on other non-zero coefficients;
quantizing a maximum value of maximum coefficients corresponding to multiple segments of frequency domain resources, or multiple reporting quantities, or multiple measurement resources to 1, and performing quantization within a second interval on other maximum coefficients and non-zero coefficients; or
quantizing a minimum value of maximum coefficients corresponding to multiple segments of frequency domain resources, or multiple reporting quantities, or multiple measurement resources to 1, performing quantization within a first interval on other maximum coefficients, and performing quantization within a second interval on other non-zero coefficients.

In some embodiments, the target RB is determined based on at least one of following:
an index of a starting RB or RB group within each segment of frequency domain resource indicated by the network side device;
an n-th RB or RB group within each segment of frequency domain resource indicated by the network side device;
a frequency domain interval between target RB groups within every two segments of frequency domain resources indicated by the network side device; or
a predefined reporting for an n-th RB group within each segment of frequency domain resource;
where n is a positive integer.

In some embodiments, the sending module 1102 is further used for:
in case that the first frequency domain resource includes multiple target RB groups in multiple segments of frequency domain resources, reporting phase offsets between other RB groups besides the target RB group and the target RB groups within each segment of frequency domain resource to the network side device, or reporting phase offsets between adjacent RB groups of the target RB group and the target RB groups within each segment of frequency domain resource to the network side device.

In some embodiments, the phase offset includes at least one of following:
a quantized value of a phase difference;
a cyclic shift value of a phase offset matrix; or
a phase difference reported by a compression way.

In some embodiments, the determining module 1101 is further used for at least one of:
determining the first frequency domain resource based on a number of segments and an index of a starting RB or RB group within each segment of frequency domain resource indicated by the network side device; or determining other segments of frequency domain resources in the first frequency domain resource based on one segment of frequency domain resource in the first frequency domain resource indicated by the network side device;
determining the first frequency domain resource based on a predefined number of segments and/or a predefined number of RBs or first subbands included in each segment; or
determining the first frequency domain resource based on a target granularity.

The above apparatus for reporting information provided by the embodiments of the present application may implement all the method steps implemented by the above method embodiments performed by a terminal, and may achieve the same effect. The same parts and beneficial effects as the same method embodiments are not repeated in the present application.

FIG. 12 is a second schematic structural diagram of an apparatus for reporting information according to an embodiment of the present application. As shown in FIG. 12, the apparatus for reporting information includes:
a receiving module 1201, used for receiving a frequency domain basis vector and a combining coefficient corresponding to a first frequency domain resource reported from a terminal, where the first frequency domain resource is one or more segments of frequency domain resources within a measurement bandwidth; and
a processing module 1202, used for performing preprocessing on downlink sending based on the frequency domain basis vector and the combining coefficient corresponding to the first frequency domain resource, where the preprocessing is used to eliminate a time synchronization error or a reciprocity error.

In some embodiments, the receiving module 1201 is used for:
receiving the frequency domain basis vector and the combining coefficient corresponding to the first frequency domain resource reported from the terminal based on a target granularity, where the target granularity is less than or equal to a reporting granularity of channel state information (CSI).

In some embodiments, the target granularity is determined based on at least one of following:
a correlation of a phase difference corresponding to the first frequency domain resource;
a delay difference corresponding to the first frequency domain resource and a first mapping relationship, where the first mapping relationship is used to indicate a correspondence between the delay difference and the target granularity; or
a network side configuration or a predefined rule.

In some embodiments, the first frequency domain resource includes at least one of following:
a segment of continuous frequency domain resource;
multiple segments of frequency domain resources; or
multiple target resource blocks (RBs) or target resource block (RB) groups among multiple segments of frequency domain resources.

In some embodiments, the first frequency domain resource includes at least one of following:
one or more subbands with a channel quality indicator (CQI) greater than a first threshold;
one or more subbands with a signal to interference noise ratio (SINR) greater than a second threshold;
one or more subbands, or multiple resource blocks (RBs), or multiple resource block (RB) groups selected by the terminal;
one or more subbands, or multiple resource blocks (RBs), or multiple resource block (RB) groups in a middle of a bandwidth;
a subband, or multiple resource blocks (RBs), or multiple resource block (RB) groups with a maximum size; or
multiple subband indexes, or multiple resource blocks (RBs), or multiple resource block (RB) groups configured by a network side.

In some embodiments, the receiving module 1201 is further used for:
receiving a phase offset between a second frequency domain resource and the first frequency domain resource reported from the terminal, where the second frequency domain resource is a frequency domain resource other than the first frequency domain resource within the measurement bandwidth.

In some embodiments, the target RB is determined based on at least one of following:
an index of a starting RB or RB group within each segment of frequency domain resource indicated by the network side device;
an n-th RB or RB group within each segment of frequency domain resource indicated by the network side device;
a frequency domain interval between target RB groups within every two segments of frequency domain resources indicated by the network side device; or
a predefined reporting for an n-th RB group within each segment of frequency domain resource;
where n is a positive integer.

The above apparatus for reporting information provided by the embodiments of the present application may implement all the method steps implemented by the above method embodiments performed by a network side device, and may achieve the same effect. The same parts and beneficial effects as the same method embodiments are not repeated in the present application.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

In some embodiments, a non-transitory readable storage medium is provided, the non-transitory readable storage medium stores a computer program, and the computer program is used for causing a processor to perform any of the methods for reporting information provided by the above various method embodiments.

The above non-transitory readable storage medium provided by the embodiments of the present application may implement all the method steps implemented by the above method embodiments, and may achieve the same effect. The same parts and beneficial effects as the same method embodiments are not repeated in the present application.

It should be noted that, the non-transitory readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

In some embodiments, a processor readable storage medium is provided, the processor readable storage medium stores a computer program, and the computer program is used for causing a processor to perform any of the methods for reporting information provided by the above various method embodiments.

The above processor readable storage medium provided by the embodiments of the present application may implement all the method steps implemented by the above method embodiments, and may achieve the same effect. The same parts and beneficial effects as the same method embodiments are not repeated in the present application.

In some embodiments, a computer readable storage medium is provided, the computer readable storage medium stores a computer program, and the computer program is used for causing a computer to perform any of the methods for reporting information provided by the above various method embodiments.

The above computer readable storage medium provided by the embodiments of the present application may implement all the method steps implemented by the above method embodiments, and may achieve the same effect. The same parts and beneficial effects as the same method embodiments are not repeated in the present application.

In some embodiments, a communication device is provided, the communication device stores a computer program, and the computer program is used for causing the communication device to perform any of the methods for reporting information provided by the above various method embodiments.

The above communication device provided by the embodiments of the present application may implement all the method steps implemented by the above method embodiments, and may achieve the same effect. The same parts and beneficial effects as the same method embodiments are not repeated in the present application.

In some embodiments, a chip product is provided, the chip product stores a computer program, and the computer program is used for causing the chip product to perform any of the methods for reporting information provided by the above various method embodiments.

The above chip product provided by the embodiments of the present application may implement all the method steps implemented by the above method embodiments, and may achieve the same effect. The same parts and beneficial effects as the same method embodiments are not repeated in the present application.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for reporting information, performed by a terminal, comprising:
determining a frequency domain basis vector and a combining coefficient corresponding to a first frequency domain resource based on a size of the first frequency domain resource, wherein the first frequency domain resource is one or more segments of frequency domain resources within a measurement bandwidth; and
reporting the frequency domain basis vector and the combining coefficient to a network side device.

2. The method of claim 1, wherein determining the frequency domain basis vector and the combining coefficient corresponding to the first frequency domain resource based on the size of the first frequency domain resource comprises:
determining the frequency domain basis vector and the combining coefficient based on the size of the first frequency domain resource and a target granularity, wherein the target granularity is less than or equal to a reporting granularity of channel state information (CSI).

3. The method of claim 2, wherein reporting the frequency domain basis vector and the combining coefficient to the network side device comprises:
reporting the frequency domain basis vector and the combining coefficient to the network side device based on the target granularity.

4. The method of claim 2 or 3, wherein the target granularity is determined based on at least one of following:
a correlation of a phase difference corresponding to the first frequency domain resource;
a delay difference corresponding to the first frequency domain resource and a first mapping relationship, wherein the first mapping relationship is used to indicate a correspondence between the delay difference and the target granularity; or
a network side configuration or a predefined rule.

5. The method of any of claims 1 to 4, wherein the first frequency domain resource comprises at least one of following:
a segment of continuous frequency domain resource;
multiple segments of frequency domain resources; or
multiple target resource blocks (RBs) or target resource block (RB) groups among multiple segments of frequency domain resources.

6. The method of any of claims 1 to 4, wherein the first frequency domain resource comprises at least one of following:
one or more subbands with a channel quality indicator (CQI) greater than a first threshold;
one or more subbands with a signal to interference noise ratio (SINR) greater than a second threshold;
one or more subbands, or multiple resource blocks (RBs), or multiple resource block (RB) groups selected by the terminal;
one or more subbands, or multiple resource blocks (RBs), or multiple resource block (RB) groups in a middle of a bandwidth;
a subband, or multiple resource blocks (RBs), or multiple resource block (RB) groups with a maximum size; or
multiple subband indexes, or multiple resource blocks (RBs), or multiple resource block (RB) groups configured by a network side.

7. The method of claim 6, further comprising:
reporting a phase offset between a second frequency domain resource and the first frequency domain resource to the network side device, wherein the second frequency domain resource is a frequency domain resource other than the first frequency domain resource within the measurement bandwidth.

8. The method of claim 5, wherein reporting the frequency domain basis vector and the combining coefficient to the network side device comprises:
reporting a frequency domain basis vector and a combining coefficient corresponding to the multiple segments of frequency domain resources using a target reporting method; or reporting a frequency domain basis vector and a combining coefficient corresponding to multiple reporting quantities using a target reporting method; or reporting a frequency domain basis vector and a combining coefficient corresponding to multiple measurement resources using a target reporting method, wherein the target reporting method comprises at least one of following:
reporting a same frequency domain basis vector among frequency domain basis vectors corresponding to different segments of frequency domain resources, and reporting combining coefficients of different segments of frequency domain resources separately; or reporting a same frequency domain basis vector among frequency domain basis vectors corresponding to different reporting quantities, and reporting combining coefficients of different reporting quantities separately; or reporting a same frequency domain basis vector among frequency domain basis vectors corresponding to different measurement resources, and reporting combining coefficients of different measurement resources separately;
reporting a same frequency domain basis vector among frequency domain basis vectors corresponding to different segments of frequency domain resources, and reporting combining coefficients of different segments of frequency domain resources jointly; or reporting a same frequency domain basis vector among frequency domain basis vectors corresponding to different reporting quantities, and reporting combining coefficients of different reporting quantities jointly; or reporting a same frequency domain basis vector among frequency domain basis vectors corresponding to different measurement resources, and reporting combining coefficients of different measurement resources jointly;
reporting different frequency domain basis vectors among frequency domain basis vectors corresponding to different segments of frequency domain resources, and reporting combining coefficients of different segments of frequency domain resources separately; or reporting different frequency domain basis vectors among frequency domain basis vectors corresponding to different reporting quantities, and reporting combining coefficients of different reporting quantities separately; or reporting different frequency domain basis vectors among frequency domain basis vectors corresponding to different measurement resources, and reporting combining coefficients of different measurement resources separately; or
reporting different frequency domain basis vectors among frequency domain basis vectors corresponding to different segments of frequency domain resources, and reporting combining coefficients of different segments of frequency domain resources jointly; or reporting different frequency domain basis vectors among frequency domain basis vectors corresponding to different reporting quantities, and reporting combining coefficients of different reporting quantities jointly; or reporting different frequency domain basis vectors among frequency domain basis vectors corresponding to different measurement resources, and reporting combining coefficients of different measurement resources jointly;
wherein the combining coefficient comprises at least one of: a non-zero coefficient value, or a maximum coefficient value.

9. The method of claim 5, wherein a quantization method of the combining coefficient comprises at least one of following:
performing quantization within a first interval on a maximum coefficient corresponding to each segment of frequency domain resource, or each reporting quantity, or each measurement resource, and performing quantization within a second interval on other non-zero coefficients;
quantizing a maximum value of maximum coefficients corresponding to multiple segments of frequency domain resources, or multiple reporting quantities, or multiple measurement resources to 1, and performing quantization within a second interval on other maximum coefficients and non-zero coefficients; or
quantizing a minimum value of maximum coefficients corresponding to multiple segments of frequency domain resources, or multiple reporting quantities, or multiple measurement resources to 1, performing quantization within a first interval on other maximum coefficients, and performing quantization within a second interval on other non-zero coefficients.

10. The method of claim 5, wherein the target RB is determined based on at least one of following:
an index of a starting RB or RB group within each segment of frequency domain resource indicated by the network side device;
an n-th RB or RB group within each segment of frequency domain resource indicated by the network side device;
a frequency domain interval between target RB groups within every two segments of frequency domain resources indicated by the network side device; or
a predefined reporting for an n-th RB group within each segment of frequency domain resource;
wherein n is a positive integer.

11. The method of claim 5, further comprising:
in case that the first frequency domain resource comprises multiple target RB groups in multiple segments of frequency domain resources, reporting phase offsets between other RB groups besides the target RB group and the target RB groups within each segment of frequency domain resource to the network side device, or reporting phase offsets between adjacent RB groups of the target RB group and the target RB groups within each segment of frequency domain resource to the network side device.

12. The method of claim 7 or 11, wherein the phase offset comprises at least one of following:
a quantized value of a phase difference;
a cyclic shift value of a phase offset matrix; or
a phase difference reported by a compression way.

13. The method of any of claims 5 to 12, further comprising at least one of following:
determining the first frequency domain resource based on a number of segments and an index of a starting RB or RB group within each segment of frequency domain resource indicated by the network side device; or determining other segments of frequency domain resources in the first frequency domain resource based on one segment of frequency domain resource in the first frequency domain resource indicated by the network side device;
determining the first frequency domain resource based on a predefined number of segments and/or a predefined number of RBs or first subbands comprised in each segment; or
determining the first frequency domain resource based on a target granularity.

14. A method for reporting information, performed by a network side device, comprising:
receiving a frequency domain basis vector and a combining coefficient corresponding to a first frequency domain resource reported from a terminal, wherein the first frequency domain resource is one or more segments of frequency domain resources within a measurement bandwidth; and
performing preprocessing on downlink sending based on the frequency domain basis vector and the combining coefficient corresponding to the first frequency domain resource, wherein the preprocessing is used to eliminate a time synchronization error or a reciprocity error.

15. The method of claim 14, wherein receiving the frequency domain basis vector and the combining coefficient corresponding to the first frequency domain resource reported from the terminal comprises:
receiving the frequency domain basis vector and the combining coefficient corresponding to the first frequency domain resource reported from the terminal based on a target granularity, wherein the target granularity is less than or equal to a reporting granularity of channel state information (CSI).

16. The method of claim 15, wherein the target granularity is determined based on at least one of following:
a correlation of a phase difference corresponding to the first frequency domain resource;
a delay difference corresponding to the first frequency domain resource and a first mapping relationship, wherein the first mapping relationship is used to indicate a correspondence between the delay difference and the target granularity; or
a network side configuration or a predefined rule.

17. The method of any of claims 14 to 16, wherein the first frequency domain resource comprises at least one of following:
a segment of continuous frequency domain resource;
multiple segments of frequency domain resources; or
multiple target resource blocks (RBs) or target resource block (RB) groups among multiple segments of frequency domain resources.

18. The method of any of claims 14 to 16, wherein the first frequency domain resource comprises at least one of following:
one or more subbands with a channel quality indicator (CQI) greater than a first threshold;
one or more subbands with a signal to interference noise ratio (SINR) greater than a second threshold;
one or more subbands, or multiple resource blocks (RBs), or multiple resource block (RB) groups selected by the terminal;
one or more subbands, or multiple resource blocks (RBs), or multiple resource block (RB) groups in a middle of a bandwidth;
a subband, or multiple resource blocks (RBs), or multiple resource block (RB) groups with a maximum size; or
multiple subband indexes, or multiple resource blocks (RBs), or multiple resource block (RB) groups configured by a network side.

19. The method of claim 18, further comprising:
receiving a phase offset between a second frequency domain resource and the first frequency domain resource reported from the terminal, wherein the second frequency domain resource is a frequency domain resource other than the first frequency domain resource within the measurement bandwidth.

20. The method of claim 17, wherein the target RB is determined based on at least one of following:
an index of a starting RB or RB group within each segment of frequency domain resource indicated by the network side device;
an n-th RB or RB group within each segment of frequency domain resource indicated by the network side device;
a frequency domain interval between target RB groups within every two segments of frequency domain resources indicated by the network side device; or
a predefined reporting for an n-th RB group within each segment of frequency domain resource;
wherein n is a positive integer.

21. A terminal, comprising a memory, a transceiver and a processor,
wherein the memory is used for storing a computer program, the transceiver is used for receiving and sending data under control of the processor, and the processor is used for reading the computer program in the memory and performing the following operations:
determining a frequency domain basis vector and a combining coefficient corresponding to a first frequency domain resource based on a size of the first frequency domain resource, wherein the first frequency domain resource is one or more segments of frequency domain resources within a measurement bandwidth; and
reporting the frequency domain basis vector and the combining coefficient to a network side device.

22. The terminal of claim 21, wherein determining the frequency domain basis vector and the combining coefficient corresponding to the first frequency domain resource based on the size of the first frequency domain resource comprises:
determining the frequency domain basis vector and the combining coefficient based on the size of the first frequency domain resource and a target granularity, wherein the target granularity is less than or equal to a reporting granularity of channel state information (CSI).

23. The terminal of claim 22, wherein reporting the frequency domain basis vector and the combining coefficient to the network side device comprises:
reporting the frequency domain basis vector and the combining coefficient to the network side device based on the target granularity.

24. The terminal of any of claims 21 to 23, wherein the first frequency domain resource comprises at least one of following:
a segment of continuous frequency domain resource;
multiple segments of frequency domain resources; or
multiple target resource blocks (RBs) or target resource block (RB) groups among multiple segments of frequency domain resources.

25. The terminal of any of claims 21 to 23, wherein the operations further comprise:
reporting a phase offset between a second frequency domain resource and the first frequency domain resource to the network side device, wherein the second frequency domain resource is a frequency domain resource other than the first frequency domain resource within the measurement bandwidth.

26. The terminal of claim 24, wherein reporting the frequency domain basis vector and the combining coefficient to the network side device comprises:
reporting a frequency domain basis vector and a combining coefficient corresponding to the multiple segments of frequency domain resources using a target reporting method; or reporting a frequency domain basis vector and a combining coefficient corresponding to multiple reporting quantities using a target reporting method; or reporting a frequency domain basis vector and a combining coefficient corresponding to multiple measurement resources using a target reporting method, wherein the target reporting method comprises at least one of following:
reporting a same frequency domain basis vector among frequency domain basis vectors corresponding to different segments of frequency domain resources, and reporting combining coefficients of different segments of frequency domain resources separately; or reporting a same frequency domain basis vector among frequency domain basis vectors corresponding to different reporting quantities, and reporting combining coefficients of different reporting quantities separately; or reporting a same frequency domain basis vector among frequency domain basis vectors corresponding to different measurement resources, and reporting combining coefficients of different measurement resources separately;
reporting a same frequency domain basis vector among frequency domain basis vectors corresponding to different segments of frequency domain resources, and reporting combining coefficients of different segments of frequency domain resources jointly; or reporting a same frequency domain basis vector among frequency domain basis vectors corresponding to different reporting quantities, and reporting combining coefficients of different reporting quantities jointly; or reporting a same frequency domain basis vector among frequency domain basis vectors corresponding to different measurement resources, and reporting combining coefficients of different measurement resources jointly;
reporting different frequency domain basis vectors among frequency domain basis vectors corresponding to different segments of frequency domain resources, and reporting combining coefficients of different segments of frequency domain resources separately; or reporting different frequency domain basis vectors among frequency domain basis vectors corresponding to different reporting quantities, and reporting combining coefficients of different reporting quantities separately; or reporting different frequency domain basis vectors among frequency domain basis vectors corresponding to different measurement resources, and reporting combining coefficients of different measurement resources separately; or
reporting different frequency domain basis vectors among frequency domain basis vectors corresponding to different segments of frequency domain resources, and reporting combining coefficients of different segments of frequency domain resources jointly; or reporting different frequency domain basis vectors among frequency domain basis vectors corresponding to different reporting quantities, and reporting combining coefficients of different reporting quantities jointly; or reporting different frequency domain basis vectors among frequency domain basis vectors corresponding to different measurement resources, and reporting combining coefficients of different measurement resources jointly;
wherein the combining coefficient comprises at least one of: a non-zero coefficient value, or a maximum coefficient value.

27. The terminal of claim 24, wherein the operations further comprise:
in case that the first frequency domain resource comprises multiple target RB groups in multiple segments of frequency domain resources, reporting phase offsets between other RB groups besides the target RB group and the target RB groups within each segment of frequency domain resource to the network side device, or reporting phase offsets between adjacent RB groups of the target RB group and the target RB groups within each segment of frequency domain resource to the network side device.

28. The terminal of any of claims 24 to 27, wherein the operations further comprise at least one of following:
determining the first frequency domain resource based on a number of segments and an index of a starting RB or RB group within each segment of frequency domain resource indicated by the network side device; or determining other segments of frequency domain resources in the first frequency domain resource based on one segment of frequency domain resource in the first frequency domain resource indicated by the network side device;
determining the first frequency domain resource based on a predefined number of segments and/or a predefined number of RBs or first subbands comprised in each segment; or
determining the first frequency domain resource based on a target granularity.

29. A network side device, comprising a memory, a transceiver and a processor,
wherein the memory is used for storing a computer program, the transceiver is used for receiving and sending data under control of the processor, and the processor is used for reading the computer program in the memory and performing the following operations:
receiving a frequency domain basis vector and a combining coefficient corresponding to a first frequency domain resource reported from a terminal, wherein the first frequency domain resource is one or more segments of frequency domain resources within a measurement bandwidth; and
performing preprocessing on downlink sending based on the frequency domain basis vector and the combining coefficient corresponding to the first frequency domain resource, wherein the preprocessing is used to eliminate a time synchronization error or a reciprocity error.

30. The network side device of claim 29, wherein receiving the frequency domain basis vector and the combining coefficient corresponding to the first frequency domain resource reported from the terminal comprises:
receiving the frequency domain basis vector and the combining coefficient corresponding to the first frequency domain resource reported from the terminal based on a target granularity, wherein the target granularity is less than or equal to a reporting granularity of channel state information (CSI).

31. The network side device of claim 29 or 30, wherein the first frequency domain resource comprises at least one of following:
a segment of continuous frequency domain resource;
multiple segments of frequency domain resources; or
multiple target resource blocks (RBs) or target resource block (RB) groups among multiple segments of frequency domain resources.

32. The network side device of claim 31, wherein the operations further comprise:
receiving a phase offset between a second frequency domain resource and the first frequency domain resource reported from the terminal, wherein the second frequency domain resource is a frequency domain resource other than the first frequency domain resource within the measurement bandwidth.

33. An apparatus for reporting information, for use in a terminal, comprising:
a determining module, used for determining a frequency domain basis vector and a combining coefficient corresponding to a first frequency domain resource based on a size of the first frequency domain resource, wherein the first frequency domain resource is one or more segments of frequency domain resources within a measurement bandwidth; and
a sending module, used for reporting the frequency domain basis vector and the combining coefficient to a network side device.

34. An apparatus for reporting information, for use in a network side device, comprising:
a receiving module, used for receiving a frequency domain basis vector and a combining coefficient corresponding to a first frequency domain resource reported from a terminal, wherein the first frequency domain resource is one or more segments of frequency domain resources within a measurement bandwidth; and
a processing module, used for performing preprocessing on downlink sending based on the frequency domain basis vector and the combining coefficient corresponding to the first frequency domain resource, wherein the preprocessing is used to eliminate a time synchronization error or a reciprocity error.

35. A non-transitory readable storage medium storing a computer program, wherein the computer program is used for causing a processor to perform the method of any of claims 1 to 13, or perform the method of any of claims 14 to 20.
